# EUROPÄISCHE PATENTSCHRIFT

(11) **EP 4 054 887 B1**
(45) Veröffentlichungstag und Bekanntmachung des Hinweises auf die Patenterteilung: **29.01.2025**
(21) Anmeldenummer: 20824130.7
(22) Anmeldetag: 02.12.2020
(51) Int. Cl.: B60H 1/00, B60H 1/32, B60L 1/00, B60L 3/00, B60L 58/24, B60L 58/26, B61D 27/00, B61C 3/02

(54) **SCHIENENFAHRZEUG MIT EINER KÜHL- UND KLIMATISIERUNGSANORDNUNG**
RAIL VEHICLE HAVING A COOLING AND AIR CONDITIONING ASSEMBLY
VÉHICULE FERROVIAIRE DOTÉ D'UN ENSEMBLE DE REFROIDISSEMENT ET DE CLIMATISATION

(30) Priorität: 20.12.2019 DE 102019220400
(43) Veröffentlichungstag der Anmeldung: 14.09.2022
(73) Patentinhaber: Siemens Mobility GmbH, 81739 München (DE)
(72) Erfinder: BRENDEL, Thomas, 40822 Mettmann (DE)
(74) Vertreter: Siemens Patent Attorneys
(86) Internationale Anmeldenummer: PCT/EP2020/084220
(87) Internationale Veröffentlichungsnummer: WO 2021/121991

(56) Entgegenhaltungen:
- DE-A1- 102009 059 240
- DE-A1- 102016 121 362
- DE-A1- 102017 223 214
- DE-A1- 102018 117 097
- DE-A1- 102018 219 859
- US-A1- 2019 047 365
- US-A1- 2019 176 571

## Beschreibung

Die Erfindung betrifft ein Schienenfahrzeug mit einem Energiespeicher, in welchem elektrische Energie zur Versorgung einer Traktionseinrichtung des Schienenfahrzeugs speicherbar ist, sowie einer Kühleinrichtung, welche einer Kühlung des Energiespeichers dient. Die Erfindung betrifft weiterhin eine Kühl- und Klimatisierungsanordnung für ein Schienenfahrzeug.

Schienenfahrzeuge, die über eine fahrzeugexterne Energieversorgung, beispielsweise in Form einer Oberleitung oder einer dritten Schiene, mit elektrischer Energie versorgt werden, sind grundsätzlich auf eine vollständige Elektrifizierung des Streckennetzes angewiesen. Um diese Schienenfahrzeuge ergänzend auch auf nicht durchgängig elektrifizierten Strecken einsetzen zu können, werden diese zunehmend mit Energiespeichern, so genannten Traktionsbatterien, ausgestattet. In diesen Traktionsbatterien gespeicherte elektrische Energie dient dabei der Versorgung von Antriebskomponenten sowie gegebenenfalls von Hilfsbetrieben des Schienenfahrzeugs während des Befahrens eines nicht elektrifizierten Streckenabschnitts. Ein Laden der Traktionsbatterien erfolgt beispielsweise während des Befahrens eines elektrifizierten Streckenabschnitts oder an speziellen Ladestationen, welche insbesondere im Bereich von Haltestellen angeordnet sein können.

Eine Traktionsbatterie besteht üblicherweise aus einer Vielzahl elektrisch miteinander verbundener Batteriezellen bzw. Module von Batteriezellen mit hoher Leistung und Energiedichte. Um eine lange Lebensdauer der Batteriezellen, welche bei Schienenfahrzeugen mit einer angestrebten Einsatzdauer von bis zu 30 Jahren von besonderer Bedeutung ist, zu erzielen, sind die Batteriezellen innerhalb eines definierten Temperaturbands zu betreiben, wobei das Temperaturband insbesondere von den Materialien der Batteriezellen abhängig ist. Insbesondere bei hohen Umgebungstemperaturen ist daher eine Kühlung der Batteriezellen erforderlich, um deren Temperatur auf einen Wert innerhalb des definierten Temperaturbands zu halten. Auch erzeugen Batteriezellen bei Lade- und Entladevorgängen selbst Wärme, welche entsprechend abgeführt werden muss.

Eine Kühlung der Batteriezellen bzw. Module erfolgt mittels einer Kühleinrichtung, beispielsweise mittels mit den Gehäusen der Batteriezellen bzw. der Zellmodule verbundener Kühlkörper. Diese Kühlkörper sind beispielsweise in einem Kühlmittelkreislauf angeordnet, welcher mittels eines zirkulierenden flüssigen Kühlmittels Wärme von den Batteriezellen bzw. den Kühlkörpern abführt. Für die Kühlung des beispielsweise wasserbasierten Kühlmittels selbst kann eine Kältemaschine nach dem Prinzip einer Kompressionskältemaschine vorgesehen sein. Eine solche ausschließlich der Kühlung der Traktionsbatterie dienende Kältemaschine führt jedoch nachteilig zu hohen Kosten sowie bei einer Integration in dem Container der Traktionsbatterie zu einem erhöhten Raumbedarf für den Container an dem Schienenfahrzeug.

Zur Verringerung von Kosten und Raumbedarf schlägt Dokument DE 10 2017 223 214 A1 bereits vor, einen Kältemittelkreislauf einer Klimatisierungseinrichtung zur Kühlung eines Fahrgastraums eines Schienenfahrzeugs mit einem Kühlmittelkreislauf zur Kühlung der Traktionsbatterie des Schienenfahrzeugs über einen zusätzlichen Wärmeübertrager zu koppeln, wodurch vorteilhaft auf eine gesonderte Kältemaschine für die Traktionsbatterie verzichtet werden kann.

Bekannt sich ferner die Dokumente DE 10 2009 059 240 A1, DE 19 2016 121362 A1 sowie US 2019/047365 A1.

Insbesondere die Umsetzung der EU-Verordnung Nr. 517/2014 über fluorierte Treibhausgase, auch als neue F-Gas-Verordnung bezeichnet, erfordert eine Umstellung der in Kompressionskältemaschinen, welche insbesondere der Innenraumklimatisierung von Schienenfahrzeugen dienen, eingesetzten Kältemittel. Nach dem Stand der Technik sind die dann einzusetzenden Kältemittel brennbar, sodass von den in Schienenfahrzeugen eingesetzten Klimaanlagen ein erhöhtes Gefahrenpotenzial ausgeht.

Aufgabe der Erfindung ist es, ein Schienenfahrzeug anzugeben, welches einen sicheren Einsatz einer Kompressionskälteanlage sowohl für die Innenraumklimatisierung als auch für die Kühlung einer Traktionsbatterie ermöglicht. Diese Aufgabe wird durch das Schienenfahrzeug sowie die kombinierte Kühl- und Kälteanordnung gemäß den Merkmalen der unabhängigen Patentansprüche erfüllt. Weiterbildungen der Erfindung sind in abhängigen Patentansprüchen angegeben.

Das erfindungsgemäße Schienenfahrzeug weist zumindest einen Energiespeicher, in welchem elektrische Energie zur Versorgung einer Traktionseinrichtung speicherbar ist, eine Kühleinrichtung, welche in einem Kühlmittelkreislauf angeordnet ist und einer Kühlung des Energiespeichers dient, wobei in dem Kühlmittelkreislauf ein flüssiges Kühlmittel zirkulierbar ist, und eine Kälteeinrichtung mit einem ersten Kältemittelkreislauf, in welchem ein Kältemittel zirkulierbar ist, auf. Ferner weist das Schienenfahrzeug einen ersten Wärmeübertrager, welcher in dem Kühlmittelkreislauf und in dem ersten Kältemittelkreislauf angeordnet ist und in welchem das Kühlmittel mittels des Kältemittels kühlbar ist, eine Klimatisierungseinrichtung mit einem zweiten Wärmeübertrager, wobei mittels eines durch den zweiten Wärmeübertrager geführten forcierten Klimatisierungsluftstroms ein von zumindest einer Person nutzbarer Raum klimatisierbar ist, sowie eine Steuereinrichtung auf. Kennzeichnend ist der zweite Wärmeübertrager dabei ausschließlich in dem Kühlmittelkreislauf angeordnet und, in Fließrichtung des Kühlmittels, dem ersten Wärmeübertrager nachgeschaltet.

Der Erfindung liegt einerseits die Erkenntnis zugrunde, dass der Komforttemperaturbereich für von Personen besetzten Innenräumen des Schienenfahrzeugs innerhalb des definierten Temperaturbands für den Betrieb eines Energiespeichers des Schienenfahrzeugs liegt und somit vorteilhaft ein gemeinsamer Kühlmittelkreislauf sowohl für die Klimatisierung eines Innenraums als auch für die Kühlung eines Energiespeichers verwendet werden kann. Angesichts der erforderlichen Umsetzung der Regelungen in der einleitend genannten EU-Verordnung Nr. 517/2014 über fluorierte Treibhausgase ermöglicht die Erfindung vorteilhaft weiterhin, trotz Einsatz eines brennbaren Kältemittels in dem Kältemittelkreislauf der Kälteanlage eine die existierenden Vorschriften erfüllende Betriebssicherheit in vergleichsweise einfacher Weise zu erzielen.

Neben der Versorgung einer oder mehrerer Traktionseinrichtungen des Schienenfahrzeugs kann der Energiespeicher auch einer Versorgung von Hilfsbetrieben des Schienenfahrzeugs mit elektrischer Energie dienen, welche ansonsten von einem separaten Energiespeicher versorgt werden müssten. Da solche Hilfsbetriebe auch Klimatisierungseinrichtungen umfassen, welche einen vergleichsweise hohen Energiebedarf haben, kann durch effiziente Nutzung des gemeinsamen Kühlmittelkreislaufs der Energieverbrauch der Klimatisierungseinrichtungen des Schienenfahrzeugs reduziert und dadurch vorteilhaft die Reichweite des Schienenfahrzeugs bei gegebener Kapazität des Energiespeichers erhöht werden.

Die Klimatisierungseinrichtung dient insbesondere bei einem als ein Triebzug mit mehreren Wagen für den Personentransport ausgestalteten Schienenfahrzeug einer Klimatisierung eines Fahrgastraums in einem Wagen. Alternativ, insbesondere bei einem als eine Lokomotive ausgestalteten Schienenfahrzeug, oder ergänzend kann die Klimatisierungseinrichtung auch der Klimatisierung eines Führerstands des Schienenfahrzeugs dienen, welcher üblicherweise von dem Fahrgastraum getrennt klimatisiert wird. Die Klimatisierung kann dabei vorteilhaft nicht nur eine Kühlung, sondern durch effiziente Nutzung von Abwärme des Energiespeichers ebenso eine Erwärmung dieser Räume umfassen.

Erfindungsgemäß ist der zweite Wärmeübertrager der Klimatisierungseinrichtung, insbesondere im Unterschied zu der Lösung der einleitend genannten älteren Patentanmeldung DE 10 2017 223 214 A1, nicht in dem Kältemittelkreislauf, sondern in dem Kühlmittelkreislauf, welcher auch der Kühlung des Energiespeichers dient, angeordnet. Der zweite Wärmeübertrager ist beispielsweise als ein Luft/Wasser-Wärmeübertrager ausgestaltet, durch welchen forciert ein Luftstrom hindurchgeführt wird, wodurch dieser abhängig von dessen Temperatur sowie der Temperatur des Kühlmittels gekühlt oder erwärmt wird. Der derart konditionierte Klimatisierungsluftstrom wird in bekannter Weise beispielsweise über Luftkanäle dem Fahrgastraum und/oder Führerstand zugeführt.

Der sowohl in dem Kühlmittelkreislauf als auch in dem Kältemittelkreislauf angeordnete und somit sowohl von Kühlmittel als auch von Kältemittel durchströmbare erste Wärmeübertrager ist beispielsweise als ein Wasser/Kältemittel-Wärmeübertrager ausgestaltet. Dieser übernimmt in dem Kältemittelkreislauf die Funktion eines Verdampfers, welcher üblicherweise als ein Luft/Kältemittel-Wärmeübertrager zur Abkühlung eines Klimatisierungsluftstroms ausgestaltet ist. In dem ersten Wärmeübertrager verdampft das zuvor auf eine niedrige Temperatur gekühlte und in einem flüssigen Zustand befindliche Kältemittel und kühlt hierdurch das zirkulierende Kühlmittel in dem Kühlmittelkreislauf.

Erfindungsgemäß ist, in Fließrichtung des Kühlmittels betrachtet, der zweite Wärmeübertrager dem ersten Wärmeübertrager nachgeschaltet. Aufgrund von nicht vermeidbaren Verlusten in dem ersten Wärmeübertrager ist die Klimatisierungseinrichtung gegenüber der Lösung in der älteren Patentanmeldung DE 10 2017 223 214 A1 somit weniger effizient, jedoch ist diese reduzierte Effizienz gegenüber Effizienzeinbußen beispielsweise bei einem Betrieb der Kälteeinrichtung mit verringerter Leistung vernachlässigbar. Ferner weist das in dem zweiten Wärmeübertrager durch den forcierten Luftstrom erwärmte Kühlmittel weiterhin eine ausreichend niedrige Temperatur auf, um nachfolgend eine Kühlung des Energiespeichers zu bewirken, da der obere Wert des Temperaturbands für den Betrieb des Energiespeichers oberhalb des Komforttemperaturbereiches liegt.

Die Steuereinrichtung des erfindungsgemäßen Schienenfahrzeugs dient dazu, den Fluss des Kühlmittels in dem Kühlmittelkreislauf insbesondere hinsichtlich einer effizienten Kühlung des Energiespeichers und Klimatisierung insbesondere eines Raums zu steuern. Ebenso dient die Steuereinrichtung dazu, die Klimatisierungseinrichtung sowie den Kältemittelkreislauf zu steuern.

Einer ersten Weiterbildung des erfindungsgemäßen Schienenfahrzeugs zufolge ist die der Kühlung des Energiespeichers dienende Kühleinrichtung, in Fließrichtung des Kühlmittels, dem der Klimatisierung dienenden zweiten Wärmeübertrager nachgeschaltet und/oder diesem parallelgeschaltet.

Dieser Weiterbildung liegt die Erkenntnis zugrunde, dass das definierte Temperaturband für den Betrieb des Energiespeichers höhere Temperaturen als der der Komforttemperaturbereich für von Personen besetzten Räumen zulässt. Somit kann auch ein bereits aufgrund der Abgabe von Kälteenergie in dem zweiten Wärmeübertrager erwärmtes Kühlmittel weiterhin einer Kühlung des Energiespeichers in der Kühleinrichtung dienen.

Einer zweiten Weiterbildung zufolge weist das erfindungsgemäße Schienenfahrzeug einen dritten Wärmeübertrager auf, welcher in dem Kühlmittelkreislauf angeordnet ist, wobei der dritte Wärmeübertrager dem ersten Wärmeübertrager, in Fließrichtung des Kühlmittels, vorgeschaltet ist und wobei das Kühlmittel in dem dritten Wärmeübertrager mittels eines forcierten Kühlluftstroms kühlbar ist.

Der dritte Wärmeübertrager ist insbesondere als ein Luft/Wasser-Wärmeübertrager bzw. als ein Umgebungskühler ausgestaltet, in welchem forciert durch den Wärmeübertrager geführte Umgebungsluft eine Kühlung des Kühlmittels bewirkt. Bei aktiver Kälteeinrichtung kann hierdurch das Kühlmittel vorgekühlt werden, bevor es in dem ersten Wärmeübertrager mittels des zirkulierenden Kältemittels weiter abgekühlt wird. Bei inaktiver Kälteeinrichtung kann mittels des dritten Wärmeübertrager bereits eine ausreichende Abkühlung des Kühlmittels erzielt werden, beispielsweise bei einer niedrigen Umgebungstemperatur und einem geringen Kühlbedarf des Energiespeichers und/oder einem geringen Klimatisierungsbedarf des Raums des Schienenfahrzeugs.

Einer auf der vorstehenden zweiten Weiterbildung basierenden dritten Weiterbildung zufolge weist die Kälteeinrichtung einen vierten Wärmeübertrager auf, welcher in dem ersten Kältemittelkreislauf angeordnet ist, wobei das Kältemittel in dem vierten Wärmeübertrager mittels eines forcierten Kühlluftstroms kühlbar ist und wobei der vierte Wärmeübertrager, in Richtung des Kühlluftstroms, dem dritten Wärmeübertrager nachgeschaltet ist.

Der in dem ersten Kältekreislauf angeordnete vierte Wärmeübertrager übernimmt in dem Kältemittelkreislauf beispielsweise die Funktion eines Kondensators, in welchem das in einem gasförmigen Zustand befindliche Kältemittel durch Abkühlung verflüssigt wird. Üblicherweise ist ein Kondensator als ein Luft/Kältemittel-Wärmeübertrager ausgestaltet, durch den forciert Umgebungsluft geführt wird. Der dritte und der vierte Wärmeübertrager nutzen einen gemeinsamen forcierten Kühlluftstrom, wobei dieser in dem dritten Wärmeübertrager gegebenenfalls bereits von dem Kühlmittel erwärmt wird, die Temperatur des so erwärmten Kühlluftstrom jedoch weiterhin ausreichend niedrig für eine Verflüssigung des gasförmigen Kältemittels ist. Vorteilhaft kann hierdurch eine kompakte und kostengünstige Bauweise erzielt werden.

Einer vierten Weiterbildung zufolge weist das Schienenfahrzeug ferner ein steuerbares erstes Ventil, welches in dem Kühlmittelkreislauf angeordnet ist und mittels welchem ein Fließen des Kühlmittels durch den zweiten Wärmeübertrager steuerbar ist, und ein steuerbares zweites Ventil, welches in dem Kühlmittelkreislauf angeordnet ist und mittels welchem ein Fließen des Kühlmittels unter Umgehung des zweiten Wärmeübertragers steuerbar ist, auf.

Mittels dieser steuerbaren Ventile ist das Volumen des durch den zweiten Wärmeübertrager fließenden Kühlmittels pro Zeiteinheit regulierbar. Dabei können die Ventile von der Steuereinrichtung derart gesteuert werden, dass das zirkulierende Kühlmittel vollständig, teilweise oder überhaupt nicht durch den zweiten Wärmeübertrager fließt. Vorteilhaft kann hierdurch die Klimatisierung des Raums des Schienenfahrzeugs sehr fein gesteuert werden.

Das steuerbare erste Ventil kann, in Fließrichtung des Kühlmittels betrachtet, dem zweiten Wärmeübertrager vor- oder nachgeschaltet sein.

Einer fünften Weiterbildung zufolge weist das erfindungsgemäße Schienenfahrzeug ein steuerbares drittes Ventil auf, welches in dem Kühlmittelkreislauf angeordnet ist und, in Fließrichtung des Kühlmittels, dem zweiten Wärmeübertrager nachgeschaltet ist, und mittels welchem ein Fließen des Kühlmittels unter Umgehung der Kühleinrichtung steuerbar ist.

Das von der Steuereinrichtung steuerbare dritte Ventil in dem Kühlmittelkreislauf ermöglicht vorteilhaft, bei nicht vorhandenem bzw. nur begrenztem Bedarf einer Kühlung des Energiespeichers, beispielsweise wenn dieser aufgrund einer bestehenden fahrzeugexternen Energieversorgung keine elektrische Energie für insbesondere Antriebskomponenten des Schienenfahrzeugs bereitstellen muss, den Kühlmittelkreislauf weiterhin teilweise oder vollständig für die Klimatisierung verwenden zu können.

Nach der fünften Weiterbildung weist das erfindungsgemäße Schienenfahrzeug ferner ein steuerbares viertes Ventil auf, welches in dem Kühlmittelkreislauf angeordnet und der Kühleinrichtung, in Fließrichtung des Kühlmittels, vor- oder nachgeschaltet ist, und mittels welchem ein Fließen des Kühlmittels durch die Kühleinrichtung steuerbar ist.

Das von der Steuereinrichtung steuerbare vierte Ventil in dem Kühlmittelkreislauf ermöglicht vorteilhaft insbesondere ein vollständiges Unterbinden des Fließens von Kühlmittel durch die Kühleinrichtung. Das vierte Ventil ist, in Fließrichtung des Kühlmittels, dabei vorzugsweise dem zweiten Wärmeübertrager und dem zweiten steuerbaren Ventil nachgeschaltet. Mittels des dritten und vierten Ventils ist, insbesondere bei geringem Kühlbedarf des Energiespeichers, der Anteil des in die Kühleinrichtung fließenden Kühlmittels steuerbar. Ebenso kann ein weiteres im Kühlkreislauf angeordnetes und der Kühleinrichtung nach- bzw. vorgeschaltetes Ventil vorgesehen sein, welches dazu dient, zusammen mit dem vierten Ventil eine vollständige Trennung der Kühleinrichtung von dem Kühlmittelkreislauf zu erzielen. Eine solche vollständige Trennung kann beispielsweise bei einer Wartung, einer Reparatur oder einem Austausch des Energiespeichers erforderlich sein. Dieses weitere Ventil kann beispielsweise als ein ausschließlich manuell bedienbares Ventil ausgeführt sein.

Einer auf der zweiten oder dritten Weiterbildung basierenden sechsten Weiterbildung zufolge weist das erfindungsgemäße Schienenfahrzeug ein steuerbares fünftes Ventil auf, welches in dem Kühlmittelkreislauf angeordnet ist und, in Fließrichtung des Kühlmittels, dem dritten Wärmeübertrager vorgeschaltet ist, und mittels welchem ein Fließen des Kühlmittels durch den dritten Wärmeübertrager steuerbar ist, sowie ein steuerbares sechstes Ventil auf, welches in dem Kühlmittelkreislauf angeordnet ist und mittels welchem ein Fließen des Kühlmittels unter Umgehung des dritten Wärmeübertragers steuerbar ist.

Mittels dieser steuerbaren Ventile ist das Volumen des durch den dritten Wärmeübertrager fließenden Kühlmittels pro Zeiteinheit regulierbar. Dabei können die Ventile von der Steuereinrichtung derart gesteuert werden, dass das zirkulierende Kühlmittel vollständig, teilweise oder überhaupt nicht durch den dritten Wärmeübertrager fließt. Hierdurch kann vorteilhaft der Grad der Vorkühlung bzw. Abkühlung des Kühlmittels fein und insbesondere unabhängig von dem für die Funktion des vierten Wärmeübertragers in dem Kältemittelkreislauf erforderlichen forcierten Kühlluftstrom gesteuert werden.

Einer siebten Weiterbildung zufolge weist die Klimatisierungseinrichtung des erfindungsgemäßen Schienenfahrzeugs ferner einen fünften Wärmeübertrager auf, welcher, in Richtung des forcierten Klimatisierungsluftstroms, dem zweiten Wärmeübertrager nachgeschaltet ist und in einem Kühlmittelkreislauf der Traktionseinrichtung angeordnet ist.

Mittels des fünften Wärmeübertragers kann vorteilhaft Abwärme von Traktionseinrichtungen des Schienenfahrzeugs, beispielsweise eines in dem gleichen Wagen angeordneten Traktionsstromrichters, Transformators und/oder eines oder mehrerer Fahrmotoren, für die Klimatisierung genutzt werden. Da diese Traktionseinrichtungen üblicherweise mit einer im Vergleich zu dem definierten Temperaturband des Energiespeichers deutlich höheren Betriebstemperatur betrieben werden, weist auch das Kühlmittel des Kühlmittelkreislaufs dieser Einrichtungen eine gegenüber der Temperatur des Kühlmittelkreislaufs zur Kühlung des Energiespeichers höhere Temperatur auf. Der Klimatisierungsluftstrom kann somit in dem zweiten Wärmeübertrager vorgewärmt und in dem nachgeschalteten fünften Wärmeübertrager weiter erwärmt werden. Entsprechend der vorstehend erläuterten vierten Weiterbildung kann dabei das Volumen des durch den zweiten Wärmeübertrager fließenden Kühlmittels pro Zeiteinheit und damit der Grad der Vorwärmung des Klimatisierungsluftstroms reguliert werden.

Ferner ist in dem Kühlmittelkreislauf der Traktionseinrichtung vorzugsweise ein von der Steuereinrichtung steuerbares siebtes Ventil angeordnet, mittels welchem das Volumen des durch den fünften Wärmeübertrager fließenden Kühlmittels pro Zeiteinheit regulierbar ist. Insbesondere wenn der Klimatisierungsluftstrom einer Kühlung des Raums des Schienenfahrzeugs dient, kann mittels des siebten Ventils ein Fließen des Kühlmittels durch den fünften Wärmeübertrager und eine dadurch verursachte Erwärmung des Klimatisierungsluftstroms unterbunden werden.

Erfindungsgemäß weist die Kälteeinrichtung ferner einen zweiten Kältemittelkreislauf, in welchem ein Kältemittel zirkulierbar ist, und einen sechsten Wärmeübertrager auf, welcher in dem Kühlmittelkreislauf und in dem zweiten Kältemittelkreislauf angeordnet ist, und in welchem das Kühlmittel mittels des Kältemittels in dem zweiten Kältemittelkreislauf kühlbar ist.

Grundsätzlich kann der zweite Kältemittelkreislauf als ein redundanter Kältemittelkreislauf verwirklicht sein, welcher bei einem Ausfall des ersten Kältemittelkreislaufs eine Kühlung des Energiespeichers bzw. eine Klimatisierung des Raums sicherstellt und somit beispielsweise eine Weiterfahrt des Schienenfahrzeugs ermöglicht. Vorzugsweise sind die Kältemittelkreisläufe jedoch derart ausgelegt, dass diese nur bei einem parallelen Betrieb eine maximale Kühlung des Kühlmittels in dem ersten und sechsten Wärmeübertrager erzielen. Abhängig von einer erforderlichen Kühlleistung kann entsprechend einer der beiden Kältemittelkreisläufe von der Steuereinrichtung deaktiviert werden, wodurch vorteilhaft die für den Betrieb der Kälteeinrichtung benötigte elektrische Energie reduziert wird. Entsprechend dem ersten Wärmeübertrager ist der sechste Wärmeübertrager beispielsweise als ein Wasser/Kältemittel-Wärmeübertrager ausgestaltet, welcher in dem zweiten Kältemittelkreislauf wiederum die Funktion eines Verdampfers hat.

Die Kälteeinrichtung kann entsprechend ausgestaltete weitere Kältemittelkreisläufe aufweisen.

Einer auf der dritten und der Erfindung basierenden siebten Weiterbildung zufolge weist die Kälteeinrichtung des erfindungsgemäßen Schienenfahrzeugs ferner einen siebten Wärmeübertrager auf, welcher in dem zweiten Kältemittelkreislauf angeordnet ist, wobei das Kältemittel in dem siebten Wärmeübertrager mittels des forcierten Kühlluftstroms kühlbar ist.

Entsprechend dem vierten Wärmeübertrager der dritten Weiterbildung übernimmt der siebte Wärmeübertrager in dem zweiten Kältemittelkreislauf die Funktion eines Kondensators, in welchem das in einem gasförmigen Zustand befindliche Kältemittel durch Abkühlung verflüssigt wird. Auch dieser Kondensator ist als ein Luft/Kältemittel-Wärmeübertrager ausgestaltet, durch den forciert Umgebungsluft geführt wird. Einer auf der siebten Weiterbildung basierenden achten Weiterbildung zufolge sind der siebte Wärmeübertrager, in Richtung des Kühlluftstroms, dem vierten Wärmeübertrager nachgeschaltet und der sechste Wärmeübertrager, in Fließrichtung des Kühlmittels, dem ersten Wärmeübertrager vorgeschaltet.

Die spezielle kaskadierte Anordnung des sechsten und des ersten Wärmeübertragers in dem Kühlmittelkreislauf führt in Verbindung mit der kaskadierten Anordnung des siebten und des vierten Wärmeübertragers in dem Kühlluftstrom dazu, dass bei einem Betrieb beider Kältemittelkreisläufe eine Kondensation und eine Verdampfung der Kältemittel in den beiden Kältemittelkreisläufen auf einem jeweils unterschiedlichen Temperaturniveau stattfindet, wobei das Temperaturniveau in dem zweiten Kältemittelkreislauf höher als das Temperaturniveau in dem ersten Kältemittelkreislauf ist. Hierdurch können vorteilhaft Exergieverluste, welche aufgrund der hohen Temperaturdifferenz zwischen Kältemittel und Kühlmittel in dem sechsten und ersten Wärmeübertrager entstehen, verringert und damit die Effizienz der Kühlung des Kühlmittels erhöht werden.

Einer ebenfalls auf der siebten Weiterbildung basierenden neunten Weiterbildung zufolge sind der siebte Wärmeübertrager, in Richtung des Kühlluftstroms, parallel zu dem vierten Wärmeübertrager geschaltet und der sechste Wärmeübertrager, in Fließrichtung des Kühlmittels, parallel zu dem ersten Wärmeübertrager geschaltet.

Bei einer solchen parallelen Anordnung wird der Kühlmittelkreislauf, in Fließrichtung des Kühlmittels, vor den Wärmeübertragern aufgetrennt und hinter diesen wieder zusammengeführt, sodass das Kühlmittel zu gleichen Teilen durch den ersten und den sechsten Wärmeübertrager fließt. Dem sechsten Wärmeübertrager kann ergänzend ein steuerbares achtes Ventil vor- oder nachgeschaltet werden, um ein Fließen des Kühlmittels in dem sechsten Wärmeübertrager zu unterbinden, beispielsweise wenn von der Steuereinrichtung gesteuert der zweite Kältemittelkreislauf deaktiviert ist.

Eine erfindungsgemäße Kühl- und Klimatisierungsanordnung für ein Schienenfahrzeug, welches einen Energiespeicher aufweist, in welchem elektrische Energie zur Versorgung einer Traktionseinrichtung speicherbar ist und welcher mittels einer Kühleinrichtung kühlbar ist, weist zumindest einen Kühlmittelkreislauf, in welchem ein flüssiges Kühlmittel zirkulierbar ist und die Kühleinrichtung angeordnet ist, einen ersten Kältemittelkreislauf, in welchem ein Kältemittel zirkulierbar ist, und einen in dem Kühlmittelkreislauf und in dem ersten Kältemittelkreislauf angeordneten ersten Wärmeübertrager, wobei in dem ersten Wärmeübertrager das Kühlmittel mittels des Kältemittels kühlbar ist. Kennzeichnend weist die Kühl- und Kälteanordnung einen zweiten Wärmeübertrager auf, welcher ausschließlich in dem Kühlmittelkreislauf angeordnet ist, wobei der zweite Wärmeübertrager, in Fließrichtung des Kühlmittels, dem ersten Wärmeübertrager nachgeschaltet ist, und wobei mittels eines durch den zweiten Wärmeübertrager geführten forcierten Klimatisierungsluftstroms ein von zumindest einer Person nutzbarer Raum des Schienenfahrzeugs klimatisierbar ist.

Erfindungsgemäß weist die Kühl- und Klimatisierungsanordnung ferner einen zweiten Kältemittelkreislauf auf, in welchem ein Kältemittel zirkulierbar ist, wobei ein sechster Wärmeübertrager in dem Kühlmittelkreislauf und in dem zweiten Kältemittelkreislauf angeordnet ist und wobei in dem sechsten Wärmeübertrager das Kühlmittel mittels des Kältemittels kühlbar ist. Weitere entsprechend ausgestaltete Kältemittelkreisläufe sind ebenso denkbar.

Im Folgenden wird die Erfindung anhand von Ausführungsbeispielen näher erläutert. Dabei zeigen:
- FIG 1: ein Schienenfahrzeug,
- FIG 2: eine erste Kühl- und Klimatisierungsanordnung,
- FIG 3: eine auf der ersten Kühl- und Klimatisierungsanordnung basierende zweite Kühl- und Klimatisierungsanordnung,
- FIG 4: eine auf der zweiten Kühl- und Klimatisierungsanordnung basierende dritte Kühl- und Klimatisierungsanordnung,
- FIG 5: eine auf der dritten Kühl- und Klimatisierungsanordnung basierende vierte Kühl- und Klimatisierungsanordnung, und
- FIG 6: eine auf der dritten Kühl- und Klimatisierungsanordnung basierende und zu der vierten alternative fünfte Kühl- und Klimatisierungsanordnung.

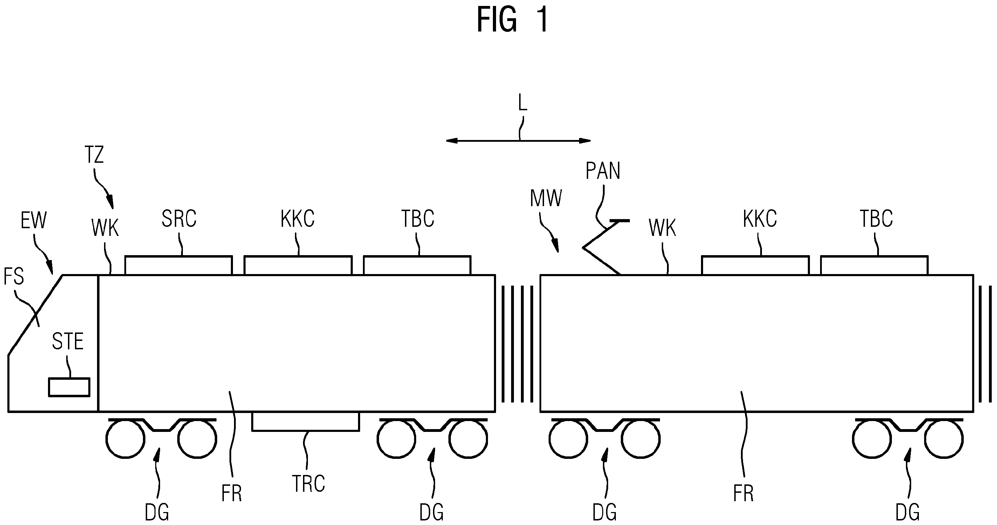

FIG 1 zeigt eine schematische Seitenansicht eines Schienenfahrzeugs, welches beispielsweise als ein Triebzug TZ mit einer Mehrzahl Wagen für die Personenbeförderung ausgestaltet ist, wobei lediglich ein erster Wagen in Form eines Endwagens EW sowie ein mit diesem Wagen gekuppelter zweiter Wagen in Form eines Mittelwagens MW dargestellt sind. Abhängig von der gewünschten Anzahl beförderbarer Personen weist der Triebzug zwei Endwagen sowie eine Anzahl Mittelwagen auf, wobei dieser alternativ auch aus lediglich zwei Endwagen bestehen kann. Ferner kann das Schienenfahrzeug lediglich einen einzigen Wagen aufweisen oder als eine Lokomotive ausgestaltet sein. Die in der FIG 1 dargestellten Endwagen EW und Mittelwagen MW verfügen jeweils über einen Wagenkasten WK, der sich über zwei Drehgestelle DG in Form von Trieb- oder Laufdrehgestellen auf nicht dargestellten Schienen abstützt. Alternativ zu dieser Anordnung von Drehgestellen können sich das hintere, rechte Ende des Endwagens EW und das vordere, linke Ende des Mittelwagens MW auch auf einem gemeinsamen Drehgestell, insbesondere auf einem so genannten Jakobs-Drehgestell, abstützen. Der Endwagen EW ist bezüglich der Längsachse L bzw. horizontalen Achse beispielhaft in mehrere räumliche Bereiche unterteilt. Diese Bereiche sind zum einen ein Führerstand FS im vorderen Bereich, zum anderen ein an den Führerstand FS angrenzender Fahrgastraum FR, in welchem insbesondere Sitzmöglichkeiten für Fahrgäste vorgesehen sind. Der Mittelwagen MW weist im Unterschied zum Endwagen EW ausschließlich einen Fahrgastraum FR. Die Fahrgasträume FR der Wagen EW, MW können von Fahrgästen über in Seitenwänden des jeweiligen Wagenkastens WK angeordnete, nicht dargestellte Türen betreten und verlassen werden. Weiterhin können Fahrgäste über einen Wagenübergang in den Fahrgastraum eines jeweils benachbarten Wagens gelangen. Ein derartiger Wagenübergang ist üblicherweise durch einen Wellen- oder Faltenbalg vor Umwelteinflüssen geschützt.

Auf dem Dach sowie unter dem Boden bzw. im Unterflurbereich des Wagenkastens WK des Endwagens EW sind beispielhaft mehrere Container für elektrische Geräte als Teil der elektrischen Ausrüstung des Triebzugs TZ angeordnet. Diese dienen beispielsweise dem Antrieb bzw. der Traktion des Triebzugs TZ, insbesondere der Versorgung in FIG 1 nicht speziell dargestellter Fahrmotoren. Im Unterflurbereich des Endwagens EW ist in einem ersten Container TRC beispielhaft ein Transformator angeordnet, dessen Primärwicklung über einen beispielhaft auf dem Dach des Mittelwagens MW angeordneten Stromabnehmer bzw. Pantographen PAN mit einer nicht dargestellten einen Hochspannungs-Wechselstrom führenden Oberleitung verbindbar ist. Sofern das Schienenfahrzeug nur über eine einen Gleichstrom führende Oberleitung oder beispielsweise eine dritte Schiene mit elektrischer Energie versorgt wird, ist ein Transformator üblicherweise nicht erforderlich. Auf dem Dach des Endwagens EW ist in einem weiteren Container SRC beispielhaft ein mit dem Transformator verbundener Traktionsstromrichter angeordnet, welcher die Fahrmotoren mit elektrischer Energie versorgt. Die Fahrmotoren sind beispielsweise in den als Triebdrehgestelle ausgestalteten Drehgestellen DG des Endwagens EW angeordnet, wobei in weiteren Drehgestellen des Triebzugs TZ, insbesondere abhängig von der benötigten maximalen Antriebsleistung, weitere Fahrmotoren angeordnet sein können.

In einem weiteren Container TBC auf dem Dach des Endwagens EW ist ein Energiespeicher in Form einer Traktionsbatterie TB angeordnet, welche beispielsweise über einen Gleichspannungssteller mit einem Gleichspannungs-Zwischenkreis des Traktionsstromrichters verbunden ist. Ein entsprechender Container TBC ist beispielhaft ebenso auf dem Dach des Mittelwagens MW angeordnet. Eine Verteilung der Traktionsbatterie auf mehrere Wagen des Schienenfahrzeugs kann einerseits vorteilhaft die Gesamtspeicherkapazität der Traktionsbatterie und dadurch die mögliche Reichweite des Triebzugs TZ unter Batteriebetrieb erhöhen, andererseits einer günstigeren Verteilung der Lasten auf die Wagen bzw. Drehgestelle des Schienenfahrzeugs zu erziele, beispielsweise um eine vorgegebene maximale Radlast nicht zu überschreiten.

Mittig auf den Dächern der Wagen EW, MW sind beispielhaft weiterer Container KKC angeordnet, in denen eine zu den nachfolgenden Figuren näher beschriebene jeweilige Kühl- und Klimatisierungsanordnung KKA angeordnet ist, die insbesondere einer Klimatisierung des jeweiligen Fahrgastraums FR des Endwagens EW und Mittelwagens MW bzw. der Klimatisierung des Führerstands FS des Endwagens EW dient.

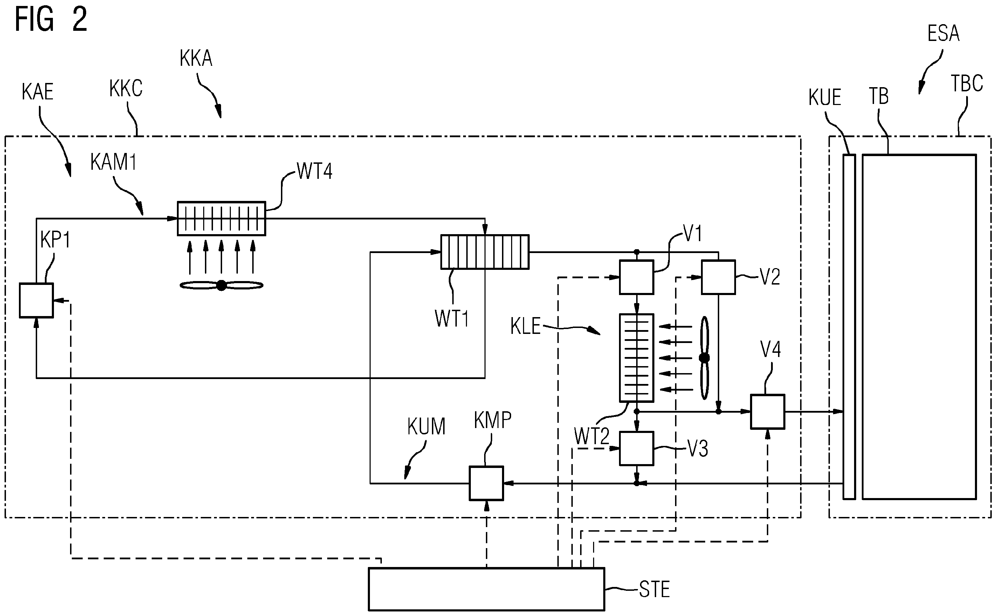

Neben den genannten Komponenten der elektrischen Ausrüstung des Triebzugs TZ können weitere Komponenten, insbesondere eine Steuereinrichtung STE für die Steuerung der Kühl- und Klimatisierungsanordnung KKA, weitere Hilfsbetriebe sowie Einrichtungen zu deren Versorgung in gleicher Weise in Containern im Dach- oder Unterflurbereich der Wagen oder auch deren Innenraum angeordnet werden. Auch ist die dargestellte Anordnung der genannten Komponenten rein beispielhaft. So kann der Container TRC für den Transformator beispielsweise ebenso auf dem Dach eines Wagens angeordnet werden, während die Container TBC der Traktionsbatterie jeweils im Unterflurbereich angeordnet sind. Für weitere Komponenten der elektrischen Ausrüstung des Triebzugs gilt entsprechendes. FIG 2 zeigt schematisch die gemäß FIG 1 auf dem Dach des Endwagens EW beispielhaft nebeneinander angeordneten Container KKC und TBC mit einer darin angeordneten Kühl- und Klimatisierungsanordnung KKA bzw. einer Energiespeicheranordnung ESA. Die Container sind dabei durch eine jeweilige strich-punktierte Linie begrenzt.

In dem rechten Container TBC der FIG 2 ist eine Energiespeicheranordnung ESA angeordnet. Diese weist zumindest eine Traktionsbatterie TB als ein Beispiel für einen Energiespeicher auf, welche beispielsweise aus mehreren Modulen mit einer jeweiligen Mehrzahl elektrisch miteinander verbundener Batteriezellen besteht. Für einen Betrieb innerhalb eines definierten Temperaturbands ist die Traktionsbatterie TB mit einer Kühleinrichtung KUE verbunden. Die Kühleinrichtung KUE ist beispielsweise als ein mit den einzelnen Batteriezellen bzw. den Gehäusen der Module verbundener Kühlkörper aus einem Metall, beispielsweise Aluminium, durch welchen ein flüssiges Kühlmittel zirkuliert, verwirklicht. In der schematischen Darstellung der FIG 2 ist die Kühleinrichtung KUE lediglich seitlich der Traktionsbatterie TB angeordnet, in der Praxis sollte die Kühleinrichtung KUE jedoch vorzugsweise die von der Traktionsbatterie TB bzw. deren Batteriezellen oder Modulen beanspruchte Grundfläche bzw. deren Oberflächen, Stirnflächen oder Seitenflächen zumindest nahezu vollständig abdecken, um eine gleichmäßige Kühlung der Batteriezellen zu gewährleisten.

Abhängig von beispielsweise einer aktuellen Temperatur der Batteriezellen bzw. Module, welche mittels in der Traktionsbatterie TB und/oder in dem Kühlmittelkreislauf KUM angeordneter Temperatursensoren bestimmbar ist, steuert die in der FIG 2 ergänzend schematisch dargestellte Steuereinrichtung STE die Zufuhr von Kühlmittel zu der Kühleinrichtung KUE sowie gegebenenfalls die Temperatur des zugeführten Kühlmittels. Die von der Steuereinrichtung STE gesteuerten Komponenten der Kühl- und Klimatisierungsanordnung KKA sind beispielhaft mit dieser über Steuerleitungen, als gestrichelte Linien dargestellt, verbunden. In den Figuren ist die Steuereinrichtung STE als außerhalb des Containers KKC für die Kühl- und Klimatisierungsanordnung KKA angeordnet dargestellt. Sie kann jedoch in gleicher Weise zusammen mit den Komponenten in dem Container KKC angeordnet sein. Ebenso kann die Steuereinrichtung STE aus mehreren Steuereinheiten bestehen, welche beispielsweise die Komponenten der Kälteeinrichtung KAE und die steuerbaren Komponenten in dem Kühlmittelkreislauf KUM sowie der Klimatisierungseinrichtung KLE getrennt, jedoch koordiniert steuern.

Die in dem Container KKC angeordnete Kühl- und Klimatisierungsanordnung KKA umfasst insbesondere eine Kälteeinrichtung KAE. Aufbau und Funktion dieser Kälteeinrichtung KAE entsprechen beispielsweise grundsätzlich denen einer Kompressionskältemaschine, wie sie nach dem Stand der Technik insbesondere bereits für die Klimatisierung von Fahrgasträumen in Triebzügen eingesetzt wird. Die Kälteeinrichtung KAE weist einen ersten Kältemittelkreislauf KAM1 auf, in dem im Wesentlichen die nachfolgend beschriebenen vier Komponenten angeordnet sind. In dem Kältemittelkreislauf einer bekannten Kompressionskältemaschine wird das zirkulierende Kältemittel gasförmig komprimiert, infolge von Wärmeabgabe kondensiert und durch Druckminderung unter Wärmeaufnahme wieder verdampft.

Auf die in FIG 2 dargestellten Komponenten des ersten Kältemittelkreislaufs KAM1 abgebildet bedeutet dies, dass von einem ersten Verdichter KP1 bzw. Kompressor Kältemitteldampf angesaugt und durch Komprimierung dessen Druck und Temperatur erhöht wird. Mittels einer Aktivierung bzw. Deaktivierung des ersten Verdichters KP1 durch die Steuereinrichtung STE ist die Zirkulation des Kältemittels in dem ersten Kältemittelkreislauf KAM1 steuerbar. In einem dem ersten Verdichter KP1 in Fließrichtung des Kältemittels nachgeschalteten vierten Wärmeübertrager WT4, einem Kondensator bzw. Verflüssiger, wird der Kältemitteldampf durch Abkühlung verflüssigt. Der vierte Wärmeübertrager WT4 ist dabei als ein Luft/Kältemittel-Wärmeübertrager ausgestaltet, in welchem beispielsweise mittels eines von einem Gebläse bzw. einem oder mehreren Lüftern generierten forcierten Kühlluftstroms der Kältemitteldampf abgekühlt und hierdurch wieder verflüssigt wird. Das Gebläse bzw. der oder die Lüfter werden von der Steuereinrichtung STE insbesondere entsprechend eines gewünschten Volumenstroms bzw. einer gewünschten Kühlwirkung angesteuert. Mittels eines dem vierten Wärmeübertrager WT4 in Fließrichtung des Kältemittels nachgeschalteten, nicht speziell dargestellten, Entspanners, welcher beispielsweise als ein Expansionsventil ausgestaltet ist, wird der Druck und damit die Temperatur des flüssigen Kältemittel reduziert. Das abgekühlte flüssige Kältemittel fließt schließlich in einen ersten Wärmeübertrager WT1, welcher beispielsweise als ein Verdampfer ausgestaltet ist, in welchem es verdampft und hierdurch Kälteenergie abgibt. Die beschriebenen Komponenten sind für den Transport des in flüssigem oder gasförmigem Zustand befindlichen Kältemittels in dem ersten Kältemittelkreislauf KAM1 mittels geeigneter Leitungen, Rohre oder Schläuche miteinander verbunden.

Ein Verdampfer, wie er in einer Kompressionskältemaschine für die Klimatisierung eines Fahrgastraums nach dem Stand der Technik eingesetzt wird, ist als ein Luft/Kältemittel-Wärmeübertrager ausgestaltet. Bei diesem wird warme Luft aus dem Fahrgastraum sowie gegebenenfalls zusätzlich aus der Umgebung des Fahrzeugs zugeführte Frischluft mithilfe eines Gebläses bzw. eines oder mehrerer Lüfter durch den Verdampfer geführt, in welchem das flüssige Kältemittel verdampft und so die durchströmende Luft abkühlt. Diese wird dann als Klimatisierungsluftstrom dem Fahrgastraum zugeführt.

Von einem solchen bekannten Verdampfer unterscheidet sich der erste Wärmeübertrager WT1 in dem ersten Kältemittelkreislauf KAM1 dahingehend, dass dieser nicht als ein Luft/Kältemittel-Wärmeübertrager, sondern als ein Wasser/Kältemittel-Wärmeübertrager ausgestaltet ist. Dieser ist beispielsweise als ein Plattenwärmetauscher ausgebildet. Der erste Wärmeübertrager WT1 ist dabei nicht nur in dem ersten Kältemittelkreislauf KAM1, sondern auch in einem Kühlmittelkreislauf KUM angeordnet, in welchem ein flüssiges Kühlmittel zirkuliert. In dem ersten Wärmeübertrager WT1 erfolgt eine Verdampfung des in flüssigem Zustand befindlichen Kältemittels somit aufgrund des durchfließenden Kühlmittels, wodurch dieses wiederum abgekühlt wird. Die Kühl- und Klimatisierungsanordnung KKA umfasst somit ebenfalls einen Kühlmittelkreislauf KUM, wobei die in dem Kühlmittelkreislauf KUM angeordnete Kühleinrichtung KUE, wie in der FIG 2 dargestellt, beispielsweise außerhalb des Containers KKC angeordnet ist. Das in dem ersten Wärmeübertrager WT1 abgekühlte Kühlmittel ist der Kühleinrichtung KUE in dem Container TBC der Energiespeicheranordnung ESA zuführbar und dient, wie vorstehend bereits beschrieben, einer Kühlung der Batteriezellen bzw. Module der Traktionsbatterie TB.

Eine Zirkulation des Kühlmittels erfolgt beispielsweise mittels einer in dem Kühlmittelkreislauf KUM angeordneten und geeignet ausgestalteten Kühlmittelpumpe KMP. Diese wird von der Steuereinrichtung STE angesteuert, wodurch deren Förderleistung steuerbar ist, wobei die Steuereinrichtung STE die Kühlmittelpumpe KMP auch lediglich an- oder ausschalten kann. Sofern erforderlich, weist der Kühlmittelkreislauf KUM ergänzend einen nicht dargestellten Ausgleichbehälter auf, welcher eine permanente vollständige Befüllung des Kühlmittelkreislaufs mit flüssigem Kühlmittel und in einem zulässigen Druckbereich sicherstellt. Entsprechend dem ersten Kältemittelkreislauf KAM1 sind auch die in dem Kühlmittelkreislauf KUM angeordneten Komponenten mittels geeigneter Leitungen, Rohre oder Schläuche miteinander verbunden.

Die weitere Funktion des Verdampfers in einer Kompressionskältemaschine nach dem Stand der Technik, nämlich eine Klimatisierung eines Fahrgastraums FR und/oder eines Führerstands FS des Triebzugs TZ mittels eines forciert durch den Verdampfer geführten Luftstroms, wird von einem zweiten Wärmeübertrager WT2 übernommen. Dieser ist als ein Luft/Wasser-Wärmeübertrager ausgestaltet, in dem Kühlmittelkreislauf KUM angeordnet und, in Fließrichtung des Kühlmittels, dem ersten Wärmeübertrager WT1 nachgeschaltet. Mithilfe beispielsweise eines oder mehrerer von der Steuereinrichtung STE gesteuerten Gebläse wird aus der Umgebung zugeführte Frischluft und/oder Umluft des Fahrgastraums durch den zweiten Wärmeübertrager WT2 geführt und in diesem von dem zirkulierenden Kühlmittel abgekühlt. Die so abgekühlte Luft wird als ein Klimatisierungsluftstrom beispielsweise über im Innendeckenbereich des Wagens angeordnete Frischluftkanäle und Luftauslässe an geeigneten Stellen der Innendecke dem Fahrgastraum zugeführt.

In dem beispielhaften Kühlmittelkreislauf KUM der FIG 2 sind neben der beschriebenen Kühlmittelpumpe KMP für die Zirkulation des Kühlmittels, dem ersten Wärmeübertrager WT1 für die Abkühlung des Kühlmittels mittels des Kältemittels, dem zweiten Wärmeübertrager WT2 für die Abkühlung eines Klimatisierungsluftstroms und der Kühleinrichtung KUE für eine Kühlung der Traktionsbatterie TB eine Mehrzahl von der Steuereinrichtung STE steuerbare Ventile V1 bis V4 vorgesehen. Diese ermöglichen insbesondere eine flexible und situationsabhängigen Steuerung der Kühlung der Traktionsbatterie TB ebenso wie des Fahrgastraums durch die Steuereinrichtung STE.

Ein steuerbares erstes Ventil V1 ist zwischen dem ersten Wärmeübertrager WT1 und dem zweiten Wärmeübertrager WT2 angeordnet bzw. in Fließrichtung des Kühlmittels dem zweiten Wärmeübertrager WT2 vorgeschaltet. Mittels des ersten Ventils V1 kann von der Steuereinrichtung STE die Durchflussmenge des Kühlmittels durch den zweiten Wärmeübertrager WT2 reguliert werden, um dadurch die Kühlwirkung des Kühlmittels auf den Klimatisierungsluftstrom zu beeinflussen. Ein steuerbares zweites Ventil V2 ist in einem parallel zu dem zweiten Wärmeübertrager WT2 und dem ersten Ventil V1 geführten Zweig des Kühlmittelkreislaufs KUM angeordnet. Abhängig von der Durchflussmenge durch das erste Ventil V1 wird die verbleibende Durchflussmenge des Kühlmittels über den parallelen Zweig bzw. das zweite Ventil V2, also unter Umgehung des zweiten Wärmeübertragers WT2, geführt. Das erste V1 und das zweite Ventil V2 können dabei von der Steuereinrichtung STE auch derart gesteuert werden, dass das Kühlmittel ausschließlich über den zweiten Wärmeübertrager WT2 oder ausschließlich über den parallelen Zweig fließt. Bei vollständigem Öffnen des ersten Ventils V1 und Schließen des zweiten Ventils V2 kann somit eine maximale Kühlleistung für die Klimatisierung des Fahrgastraums erzielt werden.

Ein steuerbares drittes Ventil V3 ist, in Fließrichtung des Kühlmittels, dem zweiten Wärmeübertrager WT2 bzw. dem dazu parallelen Zweig nachgeschaltet. Dieses dritte Ventil V3 ist parallel zu einem steuerbaren vierten Ventil V4 angeordnet, welches, in Fließrichtung des Kühlmittels, der Kühleinrichtung KUE vorgeschaltet ist. Mittels des vierten Ventils V4 reguliert die Steuereinrichtung STE die Durchflussmenge des Kühlmittels durch die Kühleinrichtung KUE abhängig von dem Kühlbedarf der Traktionsbatterie TB, während die verbleibende Menge Kühlmittel über das dritte Ventil V3 abgeführt bzw. wieder der Kühlmittelpumpe KMP zugeführt wird. Das vierte V4 und das dritte Ventil V3 können dabei von der Steuereinrichtung STE auch derart gesteuert werden, dass das Kühlmittel ausschließlich durch die Kühleinrichtung KUE oder ausschließlich über den parallelen Zweig des dritten Ventils V3 fließt. Bei vollständigem Öffnen des vierten Ventils V4 und Schließen des dritten Ventils V3 kann somit eine maximale Kühlung der Traktionsbatterie TB erzielt werden.

In dem Ausführungsbeispiel der FIG 2 ist das vierte Ventil V4, in Fließrichtung des Kühlmittels, der Kühleinrichtung KUE vorgeschaltet. Alternativ kann dieses ebenso der Kühleinrichtung KUE nachgeschaltet sein. Ferner kann ein jeweils der Kühleinrichtung KUE vor- und nachgeschaltetes Ventil vorgesehen sein, mittels welcher die Kühleinrichtung KUE vollständig von dem Kühlmittelkreislauf KUM trennbar ist. Sofern die Traktionsbatterie TB samt Kühleinrichtung KUE beispielsweise zu Wartungs- oder Austauschzwecken von dem Schienenfahrzeug TZ entfernt werden muss, ist bei der entsprechend erforderlichen Trennung der Kühleinrichtung KUE von dem Kühlmittelkreislauf KUM vorteilhaft keine vollständigen Entleerung des Kühlmittelkreislaufs KUM erforderlich.

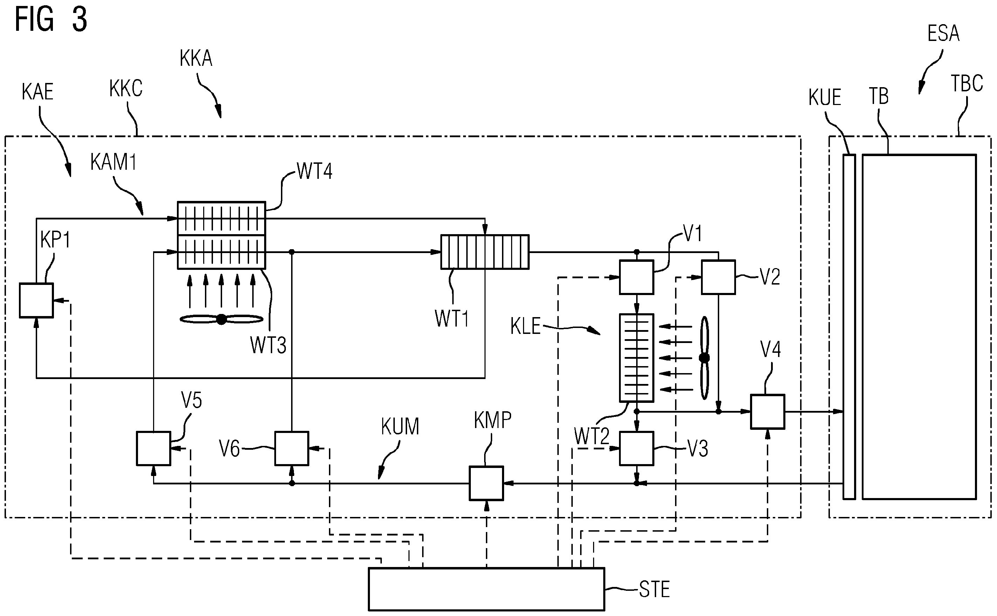

FIG 3 zeigt basierend auf der vorstehend erläuterten FIG 2 eine weitere Ausgestaltung einer Kühl- und Klimatisierungsanordnung KKA. Dabei ist in dem Kühlmittelkreislauf KUM ergänzend ein dritter Wärmeübertrager WT3 angeordnet, welcher dem ersten Wärmeübertrager WT1, in Fließrichtung des Kühlmittels, vorgeschaltet ist. Der dritte Wärmeübertrager WT3 ist beispielhaft als ein Luft/Wasser-Wärmeübertrager ausgestaltet, in welchem mittels eines forcierten Kühlluftstroms das zirkulierende Kühlmittel kühlbar ist. Der dritte Wärmeübertrager WT3 ist hierfür derart angeordnet, dass er von dem forcierten Kühlluftstrom des vierten Wärmeübertragers WT4 der Kälteeinrichtung KAE durchströmbar ist. Ferner ist der dritte Wärmeübertrager WT3, in Richtung des Kühlluftstroms, dem vierten Wärmeübertrager WT4 vorgeschaltet. Diese Anordnung stellt jedoch keine Beeinträchtigung der Funktion des vierten Wärmeübertragers WT4 dar, da das Kältemittel in diesem eine wesentlich höhere Temperatur aufweist als das Kühlmittel in dem dritten Wärmeübertrager WT3. Eine umgekehrte Anordnung der beiden Wärmeübertrager bezüglich des Kühlluftstroms würde hingegen zu einer deutlichen Beeinträchtigung der Kühlleistung des dritten Wärmeübertragers WT3 führen. Grundsätzlich sind die beiden Wärmeübertrager als getrennte Komponenten verwirklicht, alternativ können jedoch sie ebenso als eine einzige Komponente und insbesondere in einem gemeinsamen Gehäuse verwirklicht sein.

Bei einem Betrieb der Kälteeinrichtung KAE dient der dritte Wärmeübertrager WT3 einer Vorkühlung des Kühlmittels, bevor dieses in dem nachgeschalteten ersten Wärmeübertrager WT1 des ersten Kältemittelkreislaufs KAM1 durch das Kältemittel weiter abgekühlt wird. Mittels des dritten Wärmeübertragers WT3 ist das Kühlmittel jedoch auch bei deaktivierter Kälteeinrichtung KAE kühlbar, wobei hierfür lediglich die Bereitstellung eines forcierten Kühlluftstroms sichergestellt werden muss. Insbesondere bei Umgebungstemperaturen unterhalb des Komforttemperaturbereichs, bei welchen kein oder nur begrenzt kühlender Klimatisierungsluftstrom dem Fahrgastraum zugeführt werden muss, kann ein lediglich in dem dritten Wärmeübertrager WT3 gekühltes Kühlmittel für die Kühlung der Traktionsbatterie TB ausreichend sein.

Ferner sind in dem Kühlmittelkreislauf KUM der FIG 3 ein fünftes V5 und ein sechstes steuerbares Ventil V6 angeordnet. Das fünfte Ventil V5 ist dabei, in Fließrichtung des Kühlmittels, dem dritten Wärmeübertrager WT3 vorgeschaltet, während das sechste Ventil V6 in einem parallel zu dem dritten Wärmeübertrager WT3 und dem fünften Ventil V5 geführten Zweig des Kühlmittelkreislaufs KUM angeordnet ist. Mittels dieser beiden Ventile V5, V6 kann die Steuereinrichtung STE die Durchflussmenge des Kühlmittels durch den dritten Wärmeübertrager WT3 regulieren, um dadurch die Kühlwirkung des dritten Wärmeübertragers WT3 auf das Kühlmittels zu beeinflussen. Abhängig von der Durchflussmenge durch das fünfte Ventil V5 wird die verbleibende Durchflussmenge des Kühlmittels über den parallelen Zweig bzw. das sechste Ventil V6, also unter Umgehung des dritten Wärmeübertragers WT3, geführt. Das fünfte Ventil V5 und das sechste Ventil V6 sind dabei von der Steuereinrichtung STE auch derart steuerbar, dass das Kühlmittel ausschließlich über den dritten Wärmeübertrager WT3 oder ausschließlich über den parallelen Zweig fließt. Bei vollständigem Öffnen des fünften Ventils V5 und Schließen des sechsten Ventils V6 kann somit eine maximale Kühlleistung für die Abkühlung des Kühlmittels mittels des dritten Wärmeübertragers WT3 erzielt werden, während der Kühlmittelkreislauf KUM bei vollständigem Schließen des fünften Ventils V5 und Öffnen des sechsten Ventils V6 dem der vorstehend erläuterten FIG 2 entspricht.

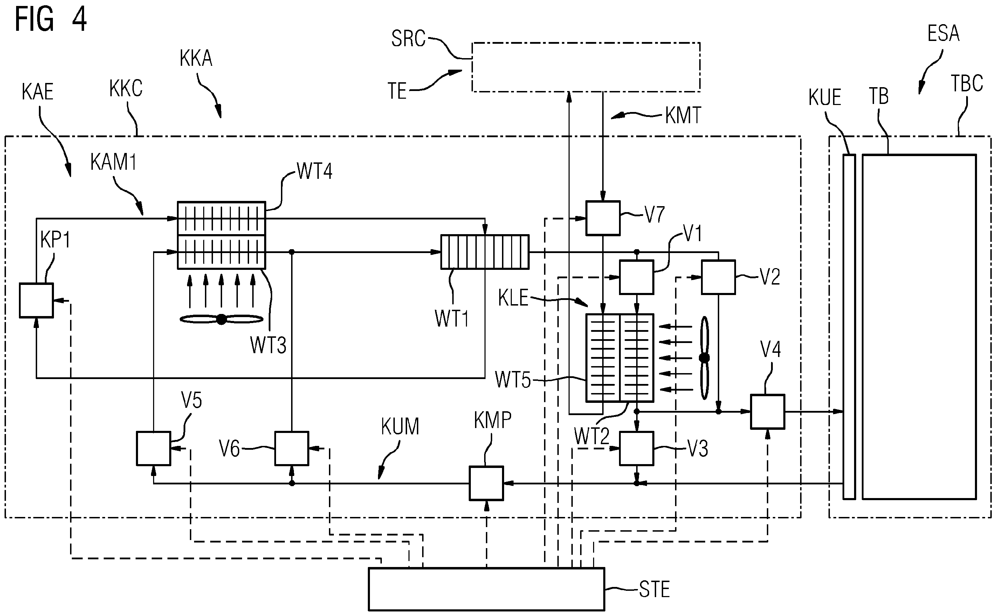

FIG 4 zeigt basierend auf der vorstehend erläuterten FIG 3 eine weitere Ausgestaltung einer Kühl- und Klimatisierungsanordnung KKA. Die nachfolgend erläuterten weiteren Komponenten können jedoch in gleicher Weise in der Kühl- und Klimatisierungseinrichtung KKA der FIG 2 verwirklicht sein.

Die Klimatisierungseinrichtung KLE der Kühl- und Klimatisierungsanordnung KKA ist in dem Beispiel der FIG 4 um einen fünften Wärmeübertrager WT5 ergänzt. Dieser ist als ein Luft/Wasser-Wärmeübertrager ausgestaltet und derart angeordnet, dass er von dem forcierten Klimatisierungsluftstroms des zweiten Wärmeübertragers WT2 der Klimatisierungseinrichtung KLE durchströmbar ist. Dabei ist der fünfte Wärmeübertrager WT5 dem zweiten Wärmeübertrager WT2, in Richtung des Klimatisierungsluftstroms, nachgeschaltet. Grundsätzlich sind die beiden Wärmeübertrager als getrennte Komponenten verwirklicht, jedoch können diese ebenso als eine einzige Komponente und insbesondere in einem gemeinsamen Gehäuse verwirklicht sein.

Der fünfte Wärmeübertrager WT5 ist in einem Kühlmittelkreislauf KMT einer Traktionseinrichtung TE des Triebzugs TZ angeordnet. Wie bezugnehmend auf FIG 1 in FIG 4 angegeben, entstammt dieser Kühlmittelkreislauf KMT einem Container SRC, in welchem dieser der Kühlung eines Traktionsstromrichters als Beispiel für eine Traktionseinrichtung TE dient. Alternativ kann der Kühlmittelkreislauf KMT ebenso dem Container TRC entstammen, in welchem dieser der Kühlung eines Transformators dient, oder der Kühlung von Traktionsmotoren dienen.

Derartige Traktionseinrichtungen werden üblicherweise mit einer im Vergleich zu dem Komforttemperaturbereich des Fahrgastraums deutlich höheren Temperatur betrieben, sodass auch deren Kühlmittelkreislauf KMT eine gegenüber der Temperatur des Kühlmittelkreislaufs KUM höhere Temperatur aufweist. Der fünfte Wärmeübertrager WT5 dient somit nicht einer Kühlung, sondern unterstützt zumindest eine Erwärmung des dem Fahrgastraum zugeführten Klimatisierungsluftstroms. Da die Temperatur des Kühlmittelkreislaufs KMT üblicherweise zudem höher als das definierte Temperaturband der Traktionsbatterie TB liegt, ist der fünfte Wärmeübertrager WT5 wie dargestellt vorzugsweise dem zweiten Wärmeübertrager WT, in Richtung des Klimatisierungsluftstroms, nachgeschaltet. Insbesondere wenn die Temperatur des den zweiten Wärmeübertrager WT2 durchströmenden Kühlmittels höher als die Temperatur des zugeführten forcierten Klimatisierungsluftstroms ist, kann in dem zweiten Wärmeübertragung WT2 eine Vorwärmung und in dem nachgeschalteten fünften Wärmeübertrager WT5 eine weitere Erwärmung des Klimatisierungsluftstroms erfolgen. Unabhängig davon kann die Klimatisierungseinrichtung KLE weitere bekannte Mittel aufweisen, welche einer Erwärmung des Klimatisierungsluftstroms dienen. Da solche Mittel üblicherweise elektrisch betrieben oder versorgt werden, kann durch effiziente Nutzung von Abwärme der Energieverbrauch dieser Mittel vorteilhaft verringert werden.

Wie vorstehend zu FIG 2 bereits beschrieben, kann die Steuereinrichtung STE mittels des ersten V1 und zweiten Ventils V2 die Durchflussmenge des Kühlmittels durch den zweiten Wärmeübertrager WT2 und somit den Grad der Vorwärmung regulieren. Ergänzend kann in dem Kühlmittelkreislauf KMT der Traktionseinrichtung TE ein steuerbares siebtes Ventil V7 angeordnet sein, mittels welchem die Durchflussmenge des Kühlmittels durch den fünften Wärmeübertrager WT5 durch die Steuereinrichtung STE ebenfalls regulierbar ist. Insbesondere bei einer Kühlung des Klimatisierungsluftstroms schließt die Steuereinrichtung STE das siebte Ventil V7 vollständig, sodass kein Kühlmittel durch den fünften Wärmeübertrager WT5 fließt und zu einer unerwünschten Erwärmung des Klimatisierungsluftstroms führt.

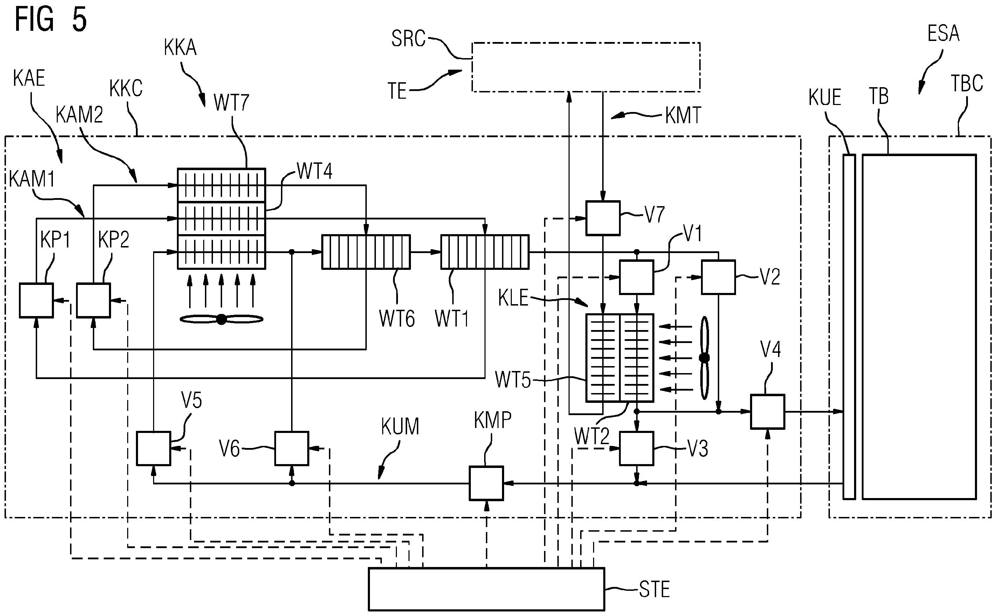

FIG 5 zeigt basierend auf der vorstehend erläuterten Ausgestaltung der FIG 4 eine erfindungsgemäße Ausgestaltung der Kühl- und Klimatisierungsanordnung KKA. Die nachfolgend beschriebenen weiteren Komponenten können jedoch in gleicher Weise in der Kühl- und Klimatisierungseinrichtung KKA der FIG 2 bzw. FIG 3 verwirklicht sein.

In dem Beispiel der FIG 5 weist die Kälteeinrichtung KAE der Kühl- und Klimatisierungsanordnung KKA ergänzend zu dem ersten Kältemittelkreislauf KAM1 einen zweiten Kältemittelkreislauf KAM2 auf. Der zweite Kältemittelkreislauf KAM2 bzw. die in diesem angeordneten Komponenten sind weitgehend identisch mit dem vorstehend zu FIG 2 beschriebenen ersten Kältemittelkreislauf KAM1 bzw. den in diesem angeordneten Komponenten. Grundsätzlich kann ein zweiter Kältemittelkreislauf KAM2 als reine Redundanz dienen, um bei einem Ausfall des ersten Kältemittelkreislaufs KAM1 eine fortgesetzte Kühlung der Traktionsbatterie und Klimatisierung des Fahrgastraums und damit den Betrieb des Triebzugs TZ sicherzustellen. In diesem Fall würden die Kältemittelkreisläufe derart ausgelegt, dass beide jeweils eine maximale Kühlleistung für die Kühlung des Kühlmittels in dem Kühlmittelkreislauf KUM bereitstellen können. Nach dem Ausführungsbeispiel der FIG 5 sind die Komponenten des ersten KAM1 und zweiten Kältemittelkreislaufs KAM2 jedoch derart ausgelegt und angeordnet, dass eine maximale Kühlleistung nur bei einem parallelen Betrieb beider Kältemittelkreisläufe KAM1, KAM2 bereitgestellt wird bzw. dass jeder der beiden Kältemittelkreisläufe KAM1, KAM2 nur einen Teil der maximalen Kühlleistung der Kälteeinrichtung KAE bereitstellt. Vorteilhaft kann hierdurch bei einem begrenzten Kühlleistungsbedarf für die Traktionsbatterie TB und/oder die Fahrgastraumklimatisierung beispielsweise einer der Kältemittelkreisläufe KAM1 bzw. KAM2 deaktiviert werden, während der andere in einem energieeffizienten Bereich betrieben wird. Bei einer Auslegung beider Kältemittelkreisläufe auf maximale Kühlleistung müsste in diesem Fall der aktive Kältemittelkreislauf in einem Teillastbereich betrieben werden, welcher insbesondere bei Kompressionskältemittelanlagen bekanntermaßen energieineffizient ist. Der Einsatz weiterer ergänzender Kältemittelkreisläufe ist insbesondere zur Erhöhung der maximalen Kühlleistung in gleicher Weise möglich.

Ein sechster Wärmeübertrager WT6, welcher sowohl in dem zweiten Kältemittelkreislauf KAM2 als auch in dem Kühlmittelkreislauf KUM angeordnet ist, ist entsprechend dem ersten Wärmeübertrager WT1 in dem ersten Kältemittelkreislauf KAM1 als ein Wasser/Kältemittel-Wärmeübertrager ausgestaltet. Dieser übernimmt in dem zweiten Kältemittelkreislauf KAM2 somit die Funktion eines Verdampfers. Der sechste Wärmeübertrager WT6 ist nach dem Ausführungsbeispiel der FIG 5 in dem Kühlmittelkreislauf KUM, in Fließrichtung des Kühlmittels, dem ersten Wärmeübertrager WT1 vorgeschaltet. Dies bedeutet, dass das zirkulierende Kühlmittel zunächst durch den sechsten Wärmeübertrager WT6 und anschließend durch den ersten Wärmeübertrager WT1 fließt und in diesen, abhängig von dem Betrieb der Kältemittelkreisläufe KAM1, KAM2, jeweils gekühlt wird.

Ferner ist ein siebter Wärmeübertrager WT7 in dem zweiten Kältemittelkreislauf KAM2 angeordnet und, entsprechend dem vierten Wärmeübertrager WT4 in dem ersten Kältemittelkreislauf KAM1, als ein Luft/Kältemittel-Wärmeübertrager ausgestaltet. Dieser übernimmt in dem zweiten Kältemittelkreislauf KAM2 somit die Funktion eines Kondensators bzw. Verflüssigers. Der siebte Wärmeübertrager WT7 ist derart angeordnet, dass er von dem forcierten Kühlluftstrom durchströmbar ist, wobei er dem vierten Wärmeübertrager WT4, in Richtung des forcierten Kühlluftstroms, nachgeschaltet ist. Dies bedeutet, dass der forcierte Kühlluftstrom zunächst den dritten Wärmeübertrager WT3, sofern ein solcher in dem Kühlmittelkreislauf KUM angeordnet ist, anschließend den vierten Wärmeübertrager WT4 und schließlich den siebten Wärmeübertrager WT7 durchströmt und in jedem der Wärmeübertrager weiter erwärmt wird. Grundsätzlich sind der siebte WT7 und der vierte Wärmeübertrager WT4 als getrennte Komponenten verwirklicht, alternativ können sie jedoch ebenso als eine einzige Komponente und insbesondere in einem gemeinsamen Gehäuse verwirklicht sein. Hierbei kann, wie vorstehend beschrieben, insbesondere auch der dritte Wärmeübertrager WT3 in dem gemeinsamen Gehäuse verwirklicht sein.

Die beschriebene Anordnung des sechsten Wärmeübertragers WT6 relativ zu dem ersten Wärmeübertrager WT1 in dem Kühlmittelkreislauf KUM sowie des siebten Wärmeübertragers WT7 relativ zu dem vierten Wärmeübertrager WT4 in dem Kühlluftstrom führt dazu, dass bei einem parallelen Betrieb beider Kältemittelkreisläufe KAM1, KAM2 in diesen die Kondensation und Verdampfung des Kältemittels auf einem jeweils unterschiedlichen Temperaturniveau stattfindet. Dabei ist das Temperaturniveau des Kältemittels in dem zweiten Kältemittelkreislauf KAM2 höher als das Temperaturniveau des Kältemittels in dem ersten Kältemittelkreislauf KAM1. Das zirkulierende Kühlmittel wird entsprechend in dem sechsten Wärmeübertrager WT6 mittels des Kältemittels mit der höheren Temperatur vorgekühlt und in dem nachgeschalteten ersten Wärmeübertrager WT1 mittels des Kältemittels mit der niedrigeren Temperatur weiter heruntergekühlt. Hierdurch werden Exergieverluste, welche aufgrund einer hohen Temperaturdifferenz zwischen Kältemittel und Kühlmittel in einem Wärmeübertrager entstehen, verringert und damit die Effizienz der Kühlung des Kühlmittels vorteilhaft erhöht.

Weitere Kältemittelkreisläufe entsprechend dem ersten und zweiten Kältemittelkreislauf können in der Kälteeinrichtung KAE vorgesehen sein. Diese ermöglichen in gleicher Weise eine Erhöhung der Kühlleistung sowie alternativ oder ergänzend eine Verringerung von Exergieverlusten.

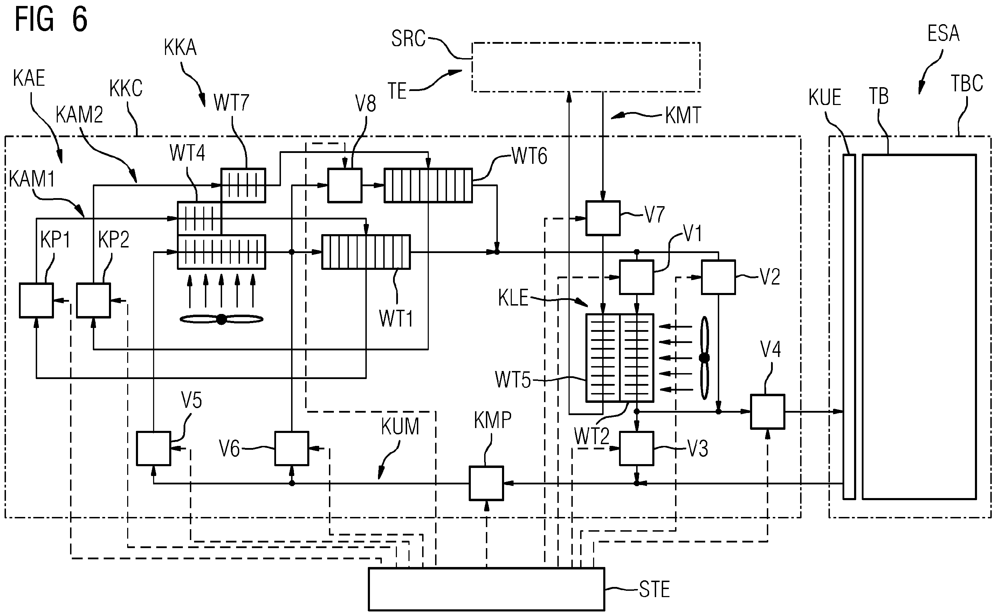

FIG 6 zeigt eine zu der vorstehend beschriebenen FIG 5 alternative Ausgestaltung der Kälteeinrichtung KAE einer erfindungsgemäß ausgestalteten Kühl- und Klimatisierungsanordnung KKA. Auch diese Ausgestaltung basiert auf der Ausgestaltung der FIG 4, kann jedoch ebenso in der Kühl- und Klimatisierungseinrichtung KKA der FIG 2 bzw. 3 verwirklicht sein.

Der zweite Kältemittelkreislauf KAM2 in der FIG 6 unterscheidet sich von dem vorstehend erläuterten zweiten Kältemittelkreislauf KAM2 der FIG 5 durch die jeweilige Anordnung des sechsten WT6 und siebten Wärmeübertragers WT7 relativ zu dem ersten WT1 bzw. vierten Wärmeübertrager WT4 des ersten Kältemittelkreislaufs KAM1. Dabei ist der sechste Wärmeübertrager WT6 in dem Kühlmittelkreislauf KUM parallel zu dem ersten Wärmeübertrager WT1 angeordnet und der siebte Wärmeübertrager WT7 in dem Kühlluftstrom parallel zu dem vierten Wärmeübertrager WT4 angeordnet.

Durch die jeweils parallele Anordnung der Wärmeübertrager WT6 und WT1 bzw. WT7 und WT4 weisen die beiden Kältemittelkreisläufe KAM1, KAM2 bei einem parallelen Betrieb ein gleiches Temperaturniveau des Kältemittels auf. Der Kühlmittelkreislauf KUM ist, in Fließrichtung des Kühlmittels, vor dem ersten WT1 und sechsten Wärmeübertrager WT6, jedoch hinter dem dritten Wärmeübertrager WT3 und dem sechsten steuerbaren Ventil V6, sofern diese jeweils in dem Kühlmittelkreislauf KUM angeordnet sind, aufgetrennt. Entsprechend fließt zirkulierendes Kühlmittel grundsätzlich zu gleichen Teilen sowohl durch den ersten Wärmeübertrager WT1 als auch durch den sechsten Wärmeübertrager WT6, in denen das Kühlmittel jeweils mittels des Kältemittels in dem ersten KAM1 bzw. zweiten Kältemittelkreislauf KAM2 gekühlt wird.

In dem Beispiel der FIG 6 ist dem sechsten Wärmeübertrager WT6, in Fließrichtung des Kühlmittels, ergänzend ein steuerbares achtes Ventil V8 vorgeschaltet. Ein solches von der Steuereinrichtung STE steuerbares Ventil kann alternativ dem sechsten Wärmeübertrager WT6 nachgeschaltet sein. Mittels dieses achten Ventils V8 kann die Steuereinrichtung STE die Durchflussmenge des Kühlmittels durch den sechsten Wärmeübertrager WT6 regulieren, wobei ein Fließen des Kühlmittels durch vollständiges Schließen des achten Ventils V8 ebenso vollständig unterbunden werden kann. Letzteres ist insbesondere bei einem ausgefallenen zweiten Kältemittelkreislauf KAM2 sinnvoll. In gleicher Weise kann auch dem in dem Kühlmittelkreislauf KUM parallel angeordneten ersten Wärmeübertrager WT1 ein steuerbares Ventil vor- oder nachgeschaltet sein, um ein Fließen des Kühlmittels durch den ersten Wärmeübertrager WT1 entsprechend durch die Steuereinrichtung STE zu regulieren.

Wie vorstehend zu FIG 5 und 6 erläutert, ermöglicht der Einsatz einer Kälteeinrichtung KAE mit zwei oder mehr Kältemittelkreisläufen vorteilhaft sowohl eine effizientere als auch feiner regulierbare Kühlung des zirkulierenden Kühlmittels. Abhängig von dem Betrieb des jeweiligen Kältemittelkreislaufs und der Stellung der steuerbaren Ventile V5, V6 und V8 kann das zirkulierende Kühlmittel in dem dritten Wärmeübertrager WT3 mittels des forcierten Kühlluftstroms und/oder in dem ersten WT1 mittels des Kältemittels in dem ersten Kältemittelkreislauf KAM1 und/oder in dem sechsten Wärmeübertrager WT6 mittels des Kältemittels in dem zweiten Kältemittelkreislauf KAM2 gekühlt werden.

Abhängig von einem jeweiligen Kühlbedarf der Traktionsbatterie sowie des Klimatisierungsluftstroms für die Fahrgastraumklimatisierung von der Steuereinrichtung STE ist hierdurch ein insbesondere hinsichtlich eines Energieverbrauchs optimaler Betrieb der verschiedenen Komponenten der Kühl- und Klimatisierungsanordnung KKA erzielbar. Eine energieeffiziente Kühlung und Klimatisierung ist bei Schienenfahrzeugen, deren Haupt- oder ausschließliche Energiequelle eine Traktionsbatterie ist, von besonderer Bedeutung, da ein ineffizienter Betrieb von Hilfsbetrieben bzw. Nebenaggregaten, zu denen Kühl- und Klimatisierungseinrichtungen gehören, zu einer Verringerung einer mit in der Traktionsbatterie gespeicherter elektrischer Energie erzielbaren Reichweite führt bzw. eine Erhöhung der Kapazität der Traktionsbatterie erfordert.

## Patentansprüche

1. Schienenfahrzeug (TZ), zumindest aufweisend:
- einen Energiespeicher (TB), in welchem elektrische Energie zur Versorgung einer Traktionseinrichtung (TE) speicherbar ist,
- eine Kühleinrichtung (KUE), welche in einem Kühlmittelkreislauf (KUM) angeordnet ist und einer Kühlung des Energiespeichers (TB) dient, wobei in dem Kühlmittelkreislauf (KUM) ein flüssiges Kühlmittel zirkulierbar ist,
- eine Kälteeinrichtung (KAE) mit einem ersten Kältemittelkreislauf (KAM1), in welchem ein Kältemittel zirkulierbar ist,
- einen ersten Wärmeübertrager (WT1), welcher in dem Kühlmittelkreislauf (KUM) und in dem ersten Kältemittelkreislauf (KAM1) angeordnet ist und in welchem das Kühlmittel mittels des Kältemittels kühlbar ist,
- eine Klimatisierungseinrichtung (KLE) mit einem zweiten Wärmeübertrager (WT2), wobei mittels eines durch den zweiten Wärmeübertrager (WT2) geführten forcierten Klimatisierungsluftstroms ein von zumindest einer Person nutzbarer Raum (FS, FR) klimatisierbar ist, und
- eine Steuereinrichtung (STE),
wobei der zweite Wärmeübertrager (WT2) ausschließlich in dem Kühlmittelkreislauf (KUM) angeordnet und, in Fließrichtung des Kühlmittels, dem ersten Wärmeübertrager (WT1) nachgeschaltet ist,
**dadurch gekennzeichnet, dass**
die Kälteeinrichtung (KAE) ferner aufweist:
- einen zweiten Kältemittelkreislauf (KAM2), in welchem ein Kältemittel zirkulierbar ist, und
- einen sechsten Wärmeübertrager (WT6), welcher in dem Kühlmittelkreislauf (KUM) und in dem zweiten Kältemittelkreislauf (KAM2) angeordnet ist, und in welchem das Kühlmittel mittels des Kältemittels in dem zweiten Kältemittelkreislauf (KAM2) kühlbar ist.

2. Schienenfahrzeug nach Anspruch 1,
**dadurch gekennzeichnet, dass**
die Kühleinrichtung (KUE), in Fließrichtung des Kühlmittels, dem zweiten Wärmeübertrager (WT2) nachgeschaltet und/oder diesem parallelgeschaltet ist.

3. Schienenfahrzeug nach Anspruch 1 oder 2, ferner aufweisend:
einen dritten Wärmeübertrager (WT3), welcher in dem Kühlmittelkreislauf (KUM) angeordnet ist, wobei der dritte Wärmeübertrager (WT3) dem ersten Wärmeübertrager (WT1), in Fließrichtung des Kühlmittels, vorgeschaltet ist und wobei das Kühlmittel in dem dritten Wärmeübertrager (WT3) mittels eines forcierten Kühlluftstroms kühlbar ist.

4. Schienenfahrzeug nach Anspruch 3,
**dadurch gekennzeichnet, dass**
die Kälteeinrichtung (KAE) einen vierten Wärmeübertrager (WT4) aufweist, welcher in dem ersten Kältemittelkreislauf (KAM1) angeordnet ist, wobei das Kältemittel in dem vierten Wärmeübertrager (WT4) mittels eines forcierten Kühlluftstroms kühlbar ist und wobei der vierte Wärmeübertrager (WT4), in Richtung des Kühlluftstroms, dem dritten Wärmeübertrager (WT3) nachgeschaltet ist.

5. Schienenfahrzeug nach einem der vorstehenden Ansprüche, ferner aufweisend:
- ein steuerbares erstes Ventil (V1), welches in dem Kühlmittelkreislauf (KUM) angeordnet ist und mittels welchem ein Fließen des Kühlmittels durch den zweiten Wärmeübertrager (WT2) steuerbar ist, und
- ein steuerbares zweites Ventil (V2), welches in dem Kühlmittelkreislauf (KUM) angeordnet ist und mittels welchem ein Fließen des Kühlmittels unter Umgehung des zweiten Wärmeübertragers (WT2) steuerbar ist.

6. Schienenfahrzeug nach einem der vorstehenden Ansprüche, ferner aufweisend:
ein steuerbares drittes Ventil (V3), welches in dem Kühlmittelkreislauf (KUM) angeordnet ist und, in Fließrichtung des Kühlmittels, dem zweiten Wärmeübertrager (WT2) nachgeschaltet ist, und mittels welchem ein Fließen des Kühlmittels unter Umgehung der Kühleinrichtung (KUE) steuerbar ist, und
ein steuerbares viertes Ventil (V4), welches in dem Kühlmittelkreislauf (KUM) angeordnet und der Kühleinrichtung (KUE), in Fließrichtung des Kühlmittels, vor- oder
nachgeschaltet ist, und mittels welchem ein Fließen des Kühlmittels durch die Kühleinrichtung (KUE) steuerbar ist.

7. Schienenfahrzeug nach Anspruch 3 oder 4, ferner aufweisend:
- ein steuerbares fünftes Ventil (V5), welches in dem Kühlmittelkreislauf (KUM) angeordnet ist und, in Fließrichtung des Kühlmittels, dem dritten Wärmeübertrager (WT3) vorgeschaltet ist, und mittels welchem ein Fließen des Kühlmittels durch den dritten Wärmeübertrager (WT3) steuerbar ist, und
- ein steuerbares sechstes Ventil (V6), welches in dem Kühlmittelkreislauf (KUM) angeordnet ist und mittels welchem ein Fließen des Kühlmittels unter Umgehung des dritten Wärmeübertragers (WT3) steuerbar ist.

8. Schienenfahrzeug nach einem der vorstehenden Ansprüche, **dadurch gekennzeichnet, dass**
die Klimatisierungseinrichtung (KLE) ferner aufweist:
einen fünften Wärmeübertrager (WT5), welcher, in Richtung des forcierten Klimatisierungsluftstroms, dem zweiten Wärmeübertrager (WT2) nachgeschaltet ist und welcher in einem Kühlmittelkreislauf der Traktionseinrichtung (TE) angeordnet ist.

9. Schienenfahrzeug nach den Ansprüchen 1 und 4,
**dadurch gekennzeichnet, dass**
die Kälteeinrichtung (KAE) ferner aufweist:
einen siebten Wärmeübertrager (WT7), welcher in dem zweiten Kältemittelkreislauf (KAM2) angeordnet ist, wobei das Kältemittel in dem siebten Wärmeübertrager (WT7) mittels des forcierten Kühlluftstroms kühlbar ist.

10. Schienenfahrzeug nach Anspruch 9,
**dadurch gekennzeichnet, dass**
der siebte Wärmeübertrager (WT7), in Richtung des Kühlluftstroms, dem vierten Wärmeübertrager (WT4) nachgeschaltet ist und der sechste Wärmeübertrager (WT6), in Fließrichtung des Kühlmittels, dem ersten Wärmeübertrager (WT1) vorgeschaltet ist.

11. Schienenfahrzeug nach Anspruch 9,
**dadurch gekennzeichnet, dass**
der siebte Wärmeübertrager (WT7), in Richtung des Kühlluftstroms, parallel zu dem vierten Wärmeübertrager (WT4) geschaltet ist und der sechste Wärmeübertrager (WT6), in Fließrichtung des Kühlmittels, parallel zu dem ersten Wärmeübertrager (WT1) geschaltet ist.

12. Kühl- und Klimatisierungsanordnung (KKA) für ein Schienenfahrzeug (TZ), welches einen Energiespeicher (TB) aufweist, in welchem elektrische Energie zur Versorgung einer Traktionseinrichtung (TE) speicherbar ist und welcher mittels einer Kühleinrichtung (KUE) kühlbar ist,
wobei die Kühl- und Kälteanordnung (KKA) zumindest aufweist:
- einen Kühlmittelkreislauf (KUM), in welchem ein flüssiges Kühlmittel zirkulierbar ist und die Kühleinrichtung (KUE) angeordnet ist,
- einen ersten Kältemittelkreislauf (KAM1), in welchem ein Kältemittel zirkulierbar ist, und
- einen in dem Kühlmittelkreislauf (KUM) und in dem ersten Kältemittelkreislauf (KAM1) angeordneten ersten Wärmeübertrager (WT1), wobei in dem ersten Wärmeübertrager (WT1) das Kühlmittel mittels des Kältemittels kühlbar ist,
- einen zweiten Wärmeübertrager (WT2), welcher ausschließlich in dem Kühlmittelkreislauf (KUM) angeordnet ist, wobei der zweite Wärmeübertrager (WT2), in Fließrichtung des Kühlmittels, dem ersten Wärmeübertrager (WT1) nachgeschaltet ist, und wobei mittels eines durch den zweiten Wärmeübertrager (WT2) geführten forcierten Klimatisierungsluftstroms ein von zumindest einer Person nutzbarer Raum (FS, FR) des Schienenfahrzeugs (TZ) klimatisierbar ist,
**dadurch gekennzeichnet, dass**
die Kühl- und Kälteanordnung (KKA) ferner aufweist:
- einen zweiten Kältemittelkreislauf (KAM2), in welchem ein Kältemittel zirkulierbar ist, wobei ein sechster Wärmeübertrager (WT6) in dem Kühlmittelkreislauf (KUM) und in dem zweiten Kältemittelkreislauf (KAM2) angeordnet ist und wobei in dem sechsten Wärmeübertrager (WT6) das Kühlmittel mittels des Kältemittels kühlbar ist.

## Claims

1. Rail vehicle (TZ), at least having:
- an energy store (TB) in which electrical energy can be stored in order to supply a traction facility (TE),
- a cooling facility (KUE), which is arranged in a coolant circuit (KUM) and is used to cool the energy store (TB), wherein a liquid coolant can be circulated in the coolant circuit (KUM),
- a refrigeration facility (KAE) with a first refrigerant circuit (KAM1) in which a refrigerant can be circulated,
- a first heat exchanger (WT1), which is arranged in the coolant circuit (KUM) and in the first refrigerant circuit (KAM1) and in which the coolant can be cooled by means of the refrigerant,
- an air-conditioning facility (KLE) with a second heat exchanger (WT2), wherein a space (FS, FR) which can be used by at least one person can be air-conditioned by means of a forced flow of air-conditioning air guided through the second heat exchanger (WT2), and
- a control facility (STE),
wherein
the second heat exchanger (WT2) is arranged exclusively in the coolant circuit (KUM) and, in the flow direction of the coolant, is arranged downstream of the first heat exchanger (WT1),
**characterised in that**
the refrigeration facility (KAE) further has:
- a second refrigerant circuit (KAM2), in which a refrigerant can be circulated, and
- a sixth heat exchanger (WT6), which is arranged in the coolant circuit (KUM) and in the second refrigerant circuit (KAM2) and in which the coolant can be cooled by means of the refrigerant in the second refrigerant circuit (KAM2).

2. Rail vehicle according to claim 1,
**characterised in that**
the cooling facility (KUE), in the flow direction of the coolant, is arranged downstream of the second heat exchanger (WT2) and/or connected in parallel hereto.

3. Rail vehicle according to claim 1 or 2, further having:
a third heat exchanger (WT3), which is arranged in the coolant circuit (KUM), wherein the third heat exchanger (WT3) is arranged upstream of the first heat exchanger (WT1), in the flow direction of the coolant, and wherein the coolant can be cooled in the third heat exchanger (WT3) by means of a forced flow of cooling air.

4. Rail vehicle according to claim 3,
**characterised in that**
the refrigeration facility (KAE) has a fourth heat exchanger (WT4), which is arranged in the first refrigerant circuit (KAM1), wherein the refrigerant in the fourth heat exchanger (WT4) can be cooled by means of a forced flow of cooling air and wherein the fourth heat exchanger (WT4), in the direction of the flow of cooling air, is arranged downstream of the third heat exchanger (WT3).

5. Rail vehicle according to one of the preceding claims, further having:
- a coolable first valve (V1), which is arranged in the coolant circuit (KUM) and by means of which a flow of the coolant through the second heat exchanger (WT2) can be controlled, and
- a controllable second valve (V2), which is arranged in the coolant circuit (KUM) and by means of which a flow of the coolant can be controlled by bypassing the second heat exchanger (WT2).

6. Rail vehicle according to one of the preceding claims, further having:
a controllable third valve (V3), which is arranged in the coolant circuit (KUM) and, in the flow direction of the coolant, is arranged downstream of the second heat exchanger (WT2), and by means of which a flow of the coolant can be controlled by bypassing the cooling facility (KUE), and
a controllable fourth valve (V4), which is arranged in the coolant circuit (KUM) and is arranged upstream or downstream of the cooling facility (KUE), in the flow direction of the coolant and by means of which a flow of the coolant can be controlled by the cooling facility (KUE).

7. Rail vehicle according to claim 3 or 4, further having:
- a controllable fifth valve (V5), which is arranged in the coolant circuit (KUM) and, in the flow direction of the coolant, is arranged upstream of the third heat exchanger (WT3), and by means of which a flow of the coolant through the third heat exchanger (WT3) can be controlled, and
- a controllable sixth valve (V6), which is arranged in the coolant circuit (KUM) and by means of which a flow of the coolant can be controlled by bypassing the third heat exchanger (WT3).

8. Rail vehicle according to one of the preceding claims, **characterised in that**
the air-conditioning facility (KLE) further has:
a fifth heat exchanger (WT5), which, in the direction of the forced flow of air-conditioning air, is arranged downstream of the second heat exchanger (WT2) and which is arranged in a coolant circuit of the traction facility (TE).

9. Rail vehicle according to claims 1 and 4,
**characterised in that**
the refrigeration facility (KAE) further has:
a seventh heat exchanger (WT7), which is arranged in the second refrigerant circuit (KAM2), wherein the refrigerant can be cooled in the seventh heat exchanger (WT7) by means of the forced flow of cooling air.

10. Rail vehicle according to claim 9,
**characterised in that**
the seventh heat exchanger (WT7), in the direction of the flow of cooling air, is arranged downstream of the fourth heat exchanger (WT4), and the sixth heat exchanger (WT6), in the flow direction of the coolant, is arranged upstream of the first heat exchanger (WT1).

11. Rail vehicle according to claim 9,
**characterised in that**
the seventh heat exchanger (WT7), in the direction of the cooling air flow, is connected in parallel to the fourth heat exchanger (WT4), and the sixth heat exchanger (WT6), in the flow direction of the coolant, is connected in parallel to the first heat exchanger (WT1).

12. Cooling and air-conditioning arrangement (KKA) for a rail vehicle (TZ), which has an energy store (TB), in which electrical energy can be stored in order to supply a traction facility (TE) and which can be cooled by means of a cooling facility (KUE),
wherein the cooling and refrigeration arrangement (KKA) has at least:
- a coolant circuit (KUM), in which a liquid coolant can be circulated and the cooling facility (KUE) is arranged,
- a first refrigerant circuit (KAM1), in which a refrigerant can be circulated, and
- a first heat exchanger (WT1) arranged in the coolant circuit (KUM) and in the first refrigerant circuit (KAM1), wherein, in the first heat exchanger (WT1), the coolant can be cooled by means of the refrigerant,
- a second heat exchanger (WT2), which is arranged exclusively in the coolant circuit (KUM), wherein the second heat exchanger (WT2), in the flow direction of the coolant, is arranged downstream of the first heat exchanger (WT1), and wherein by means of a forced flow of air-conditioning air guided through the second heat exchanger (WT2), a space (FS, FR) in the rail vehicle (TZ) which can be used by at least one person can be air conditioned,
- **characterised in that** the cooling and refrigeration arrangement (KKA) further has:
- a second refrigerant circuit (KAM2), in which a refrigerant can be circulated, wherein a sixth heat exchanger (WT6) is arranged in the coolant circuit (KUM) and in the second refrigerant circuit (KAM2) and wherein in the sixth heat exchanger (WT6) the coolant can be cooled by means of the refrigerant.

## Revendications

1. Véhicule (TZ) ferroviaire, comportant au moins :
- un accumulateur (TB) d'énergie, dans lequel de l'énergie électrique pour l'alimentation d'un dispositif (TE) de traction peut être emmagasinée,
- un dispositif (KUE) de refroidissement, qui est monté dans un circuit (KUM) de fluide de refroidissement et qui sert au refroidissement de l'accumulateur (TB) d'énergie, dans lequel un fluide de refroidissement liquide peut circuler dans le circuit (KUM) de fluide de refroidissement,
- un dispositif (KAE) frigorifique ayant un premier circuit (KAM1) de fluide frigorifique, dans lequel un fluide frigorifique peut circuler,
- un premier échangeur de chaleur (WT1), qui est monté dans le circuit (KUM) de fluide de refroidissement et dans le circuit (KAM1) de fluide frigorifique et dans lequel le fluide de refroidissement peut être refroidi au moyen du fluide frigorifique,
- un dispositif (KLE) de conditionnement d'air ayant un deuxième échangeur de chaleur (WT2), dans lequel un espace (FS, FR) pouvant être utilisé par une personne peut être conditionné au moyen d'un courant d'air forcé de conditionnement d'air passant dans le deuxième échangeur de chaleur (WT2), et
- un dispositif (STE) de commande,
dans lequel
le deuxième échangeur de chaleur (WT2) est monté exclusivement dans le circuit (KUM) de fluide de refroidissement et est monté, dans le sens d'écoulement du fluide de refroidissement, en aval du premier échangeur de chaleur (WT1),
**caractérisé en ce que**
le dispositif (KAE) frigorifique comporte en outre :
- un deuxième circuit (KAM2) de fluide frigorifique, dans lequel un fluide frigorifique peut circuler, et
- un sixième échangeur de chaleur (WT6), qui est monté dans le circuit (KUM) de fluide de refroidissement et dans le deuxième circuit (KAM2) de fluide frigorifique et dans lequel le fluide de refroidissement peut être refroidi au moyen du fluide frigorifique dans le deuxième circuit (KAM2) de fluide frigorifique.

2. Véhicule ferroviaire suivant la revendication 1, **caractérisé en ce que**
le dispositif (KUE) de refroidissement est monté, dans le sens d'écoulement du fluide de refroidissement, en aval du deuxième échangeur de chaleur (WT2) et/ou est monté en parallèle avec celui-ci.

3. Véhicule ferroviaire suivant la revendication 1 ou 2, comportant en outre :
un troisième échangeur de chaleur (WT3), qui est monté dans le circuit (KUM) de fluide de refroidissement, dans lequel le troisième échangeur de chaleur (WT3) est monté, dans le sens d'écoulement du fluide de refroidissement, en amont du premier échangeur de chaleur (WT1) et dans lequel le fluide de refroidissement peut être refroidi dans le troisième échangeur de chaleur (WT3) au moyen d'un courant d'air forcé de refroidissement.

4. Véhicule ferroviaire suivant la revendication 3, **caractérisé en ce que**
le dispositif (KAE) frigorifique a un quatrième échangeur de chaleur (WT4), qui est monté dans le premier circuit (KAM1) de fluide frigorifique, dans lequel le fluide frigorifique peut être refroidi dans le quatrième échangeur de chaleur (WT4) au moyen d'un courant d'air forcé de refroidissement et dans lequel le quatrième échangeur de chaleur (WT4) est monté, dans le sens du courant d'air de refroidissement, en aval du troisième échangeur de chaleur (WT3).

5. Véhicule ferroviaire suivant l'une des revendications précédentes, comportant en outre :
- une première soupape (V1) qui peut être commandée, qui est montée dans le circuit (KUM) de fluide de refroidissement et au moyen de laquelle un écoulement du fluide de refroidissement dans le deuxième échangeur de chaleur (WT2) peut être commandé, et
- une deuxième soupape (V2), qui peut être commandée, qui est montée dans le circuit (KUM) de fluide de refroidissement et au moyen de laquelle un écoulement du fluide de refroidissement contournant le deuxième échangeur de chaleur (WT2) peut être commandé.

6. Véhicule ferroviaire suivant l'une des revendications précédentes, comportant en outre :
une troisième soupape (V3), qui peut être commandée, qui est montée dans le circuit (KUM) de fluide de refroidissement et qui est montée, dans le sens d'écoulement du fluide de refroidissement, en aval du deuxième échangeur de chaleur (WT2) et au moyen de laquelle un écoulement du fluide de refroidissement contournant le dispositif (KUE) de refroidissement peut être commandé, et
une quatrième soupape (V4), qui peut être commandée, qui est montée dans le circuit (KUM) de fluide de refroidissement et qui est montée en amont ou en aval du dispositif (KUE) de refroidissement, dans le sens d'écoulement du fluide de refroidissement et au moyen de laquelle un écoulement du fluide de refroidissement dans le dispositif (KUE) de refroidissement peut être commandé.

7. Véhicule ferroviaire suivant l'une des revendications 3 ou 4, comportant en outre :
- une cinquième soupape (V5), qui peut être commandée, qui est montée dans le circuit (KUM) de fluide de refroidissement et qui est montée, dans le sens d'écoulement du fluide de refroidissement, en amont du troisième échangeur de chaleur (WT3) et au moyen de laquelle un écoulement du fluide de refroidissement dans le troisième échangeur de chaleur (WT3) peut être commandé, et
- une sixième soupape (V6), qui peut être commandée, qui est montée dans le circuit (KUM) de fluide de refroidissement et au moyen de laquelle un écoulement du fluide de refroidissement contournant le troisième échangeur de chaleur (WT3) peut être commandé.

8. Véhicule ferroviaire suivant l'une des revendications précédentes,
**caractérisé en ce que**
le dispositif (KLE) de conditionnement d'air comporte en outre : un cinquième échangeur de chaleur (WT5), qui est monté, dans le sens du courant d'air forcé de conditionnement d'air, en aval du deuxième échangeur de chaleur (WT2) et qui est monté dans un circuit de fluide de refroidissement du dispositif (TE) de traction.

9. Véhicule ferroviaire suivant les revendications 1 et 4, **caractérisé en ce que**
le dispositif (KAE) frigorifique comporte en outre :
un septième échangeur de chaleur (WT7), qui est monté dans le deuxième circuit (KAM2) de fluide frigorifique, dans lequel le fluide frigorifique peut être refroidi dans le septième échangeur de chaleur (WT7) au moyen du courant d'air forcé de refroidissement.

10. Véhicule ferroviaire suivant la revendication 9, **caractérisé en ce que**
le septième échangeur de chaleur (WT7) est monté, dans le sens du courant d'air de refroidissement, en aval du quatrième échangeur de chaleur (WT4) et le sixième échangeur de chaleur (WT6) est monté, dans le sens d'écoulement du fluide de refroidissement, en amont du premier échangeur de chaleur (WT1).

11. Véhicule ferroviaire suivant la revendication 9, **caractérisé en ce que**
le septième échangeur de chaleur (WT7) est monté, dans le sens du courant d'air de refroidissement, en parallèle avec le quatrième échangeur de chaleur (WT4) et le sixième échangeur de chaleur (WT6) est monté, dans le sens d'écoulement du fluide de refroidissement, en parallèle avec le premier échangeur de chaleur (WT1).

12. Agencement (KKA) de refroidissement et de conditionnement d'air pour un véhicule (TZ) ferroviaire, qui a un accumulateur (TB) d'énergie, dans lequel de l'énergie électrique peut être emmagasinée pour l'alimentation d'un dispositif (TE) de traction et qui peut être refroidi au moyen d'un dispositif (KUE) de refroidissement,
dans lequel l'agencement (KKA) de refroidissement et frigorifique comporte au moins :
- un circuit (KUM) de fluide de refroidissement, dans lequel un fluide de refroidissement liquide peut circuler, et dans lequel le dispositif (KUE) de refroidissement est monté,
- un premier circuit (KAM1) de fluide frigorifique, dans lequel un fluide frigorifique peut circuler, et
- un premier échangeur de chaleur (WT1), monté dans le circuit (KUM) de fluide de refroidissement et dans le premier circuit (KAM1) de fluide frigorifique, dans lequel dans le premier échangeur de chaleur (WT1) le fluide de refroidissement peut être refroidi au moyen du fluide frigorifique,
- un deuxième échangeur de chaleur (WT2), qui est monté exclusivement dans le circuit (KUM) de fluide de refroidissement, dans lequel le deuxième échangeur de chaleur (WT2) est monté, dans le sens d'écoulement du fluide de refroidissement, en aval du premier échangeur de chaleur (WT1), et dans lequel au moyen d'un courant d'air forcé de conditionnement d'air passant dans le deuxième échangeur de chaleur (WT2) un espace (FS, FR) utilisable par au moins une personne du véhicule (TZ) ferroviaire peut être conditionné, **caractérisé en ce que**
l'agencement (KKA) de refroidissement et frigorifique comporte en outre :
- un deuxième circuit (KAM2) de fluide frigorifique, dans lequel un fluide frigorifique peut circuler, dans lequel un sixième échangeur de chaleur (WT6) est monté dans le circuit (KUM) de fluide de refroidissement et dans le deuxième circuit (KAM2) de fluide frigorifique, et dans lequel dans le sixième échangeur de chaleur (WT6) le fluide de refroidissement peut être refroidi au moyen du fluide frigorifique.
